# EUROPÄISCHE PATENTANMELDUNG

(11) **EP 4 484 503 A1**
(43) Veröffentlichungstag der Anmeldung: **01.01.2025**
(21) Anmeldenummer: 23181631.5
(22) Anmeldetag: 27.06.2023
(51) Int. Cl.: C09D 5/02, C09D 7/43, C09D 7/45, C09D 17/00

(54) **WÄSSRIGE STABILISATORZUSAMMENSETZUNG UND IHRE VERWENDUNG**

(71) Anmelder: EWALD DÖRKEN AG, 58313 Herdecke (DE)
(72) Erfinder: Roth, Dr., Marcel, 40589 Düsseldorf (DE); Miri, Daniel, 42327 Wuppertal (DE); Lischeid, Jan, 58300 Wetter (DE); Reusmann, Gerhard, 45259 Essen (DE)
(74) Vertreter: Freiherr von Foullon, Alexander

(57) **Zusammenfassung**

Gegenstand der vorliegenden Erfindung ist eine wässrige Zusammensetzung zur Stabilisierung von Dispersionen, welche eine Verbindung mit einer Löslichkeit im Bereich von 0,05 bis 10 g/l bei 20 °C in Wasser aufweisen, und ihre Verwendung.

## Beschreibung

Die vorliegende Erfindung betrifft das technische Gebiet der Beschichtungen, insbesondere der Halbfabrikate und Pigmentpasten für Beschichtungen.

Insbesondere betrifft die vorliegende Erfindung eine wässrige Zusammensetzung zur Stabilisierung von Dispersionen.

Weiterhin betrifft die vorliegende Erfindung die Verwendung der genannten wässrigen Zusammensetzung zur Stabilisierung von Dispersionen sowie die entsprechenden stabilisierten Dispersionen, insbesondere Halbfabrikate.

Schließlich betrifft die vorliegende Erfindung ein Verfahren zur Herstellung wässriger Zusammensetzungen zur Stabilisierung von Dispersionen.

Moderne Beschichtungssysteme, insbesondere Anstrichmittel, werden zunehmend auf Wasserbasis formuliert, da sie nach Möglichkeit frei von flüchtigen organischen Verbindungen, d.h. VOC-frei (volatile organic compound), sein sollen. Derartige VOC-freie Anstrichmittelsysteme bzw. Systeme mit einem Gehalt von weniger als 1 g/l an VOC gelten als lösemittel- und emissionsfrei. Sie sind unter Gesichtspunkten des Umwelt- und Gesundheitsschutzes nicht bzw. zumindest weniger problematisch als lösemittelbasierte Systeme.

Darüber hinaus gibt es Bestrebungen, den Einsatz von Konservierungsmitteln und Bioziden in Anstrichmitteln zu vermeiden, zumindest jedoch zu reduzieren. Wenn die Anstrichmittelsysteme keine Konservierungsmittel oder Biozide enthalten, müssen in der Regel keine Gefahrenstoffe ausgewiesen werden und die Anstrichmittel sind arbeitsschutztechnisch problemlos und ohne besondere Sicherheitsvorkehrungen anwend- und verarbeitbar.

Die Verwendung wässriger Systeme, insbesondere in Kombination mit organischen Bindemittelsystemen, führt in der Praxis regelmäßig zu einem raschen Befall der Anstrichmittel mit Keimen, insbesondere mit Bakterien, Hefen oder auch mit Schimmel, so dass den Anstrichmitteln in der Regel Konservierungsmittel und/oder Biozide beigemischt werden müssen. Dies gilt speziell für wässrige Pigmentpasten, wie sie insbesondere für Abtönsysteme eingesetzt werden. Um eine Vielzahl unterschiedlicher Farben und Farbschattierungen bereitzustellen, welche von Kunden individuell ausgewählt und zusammengestellt werden können, werden in der Regel Abtönsysteme verwendet. Abtönsysteme bestehen üblicherweise aus einer Palette von farbigen Pigmentpasten, welche mit einem Bindemittel bzw. einer Bindemittelmischung, der sogenannten Abtönbasis oder Basiszusammensetzung, gemischt werden, um Anstrichmittel, insbesondere Wandfarben, mit einem gewünschten Farbton zu erhalten. Bei den Pigmentpasten handelt es sich dabei um hochkonzentrierte pigmenthaltige Dispersionen. Die Pigmentpaste und die Base bzw. Abtönbasis ergeben zusammen dann die anwendungsfertige Farbe bzw. das anwendungsfertige Anstrichmittel.

Das Vermischen einzelner Pigmentpasten in variierenden Mengen mit der Abtönbasis erfolgt in Maschinen, in welchen der Mischvorgang softwareunterstützt durchgeführt wird. Die Pigmentpasten werden dabei mehrere Wochen, nachdem sie aus dem Originalgebinde entnommen wurden, mehr oder weniger offen gelagert und sind in dieser Zeit über die Umgebungsluft Keimen, insbesondere Bakterien, Hefen und Schimmelsporen, ausgesetzt, was bei lösemittelfreien bzw. wasserbasierten Systemen nahezu zwangsläufig zu einem Befall mit Bakterien, Hefen oder Schimmel führt.

Aus diesem Grund werden in wässrigen Pigmentpasten und Abtönsysteme nahezu ausschließlich Konservierungsmittel und Biozide eingesetzt. Der Einsatz von Bioziden und Konservierungsmitteln ist jedoch aus einer Vielzahl von Gründen nachteilig, da Biozide und Konservierungsmittel in der Regel sowohl für den Gesundheitsschutz als auch für den Umweltschutz problematische Substanzen darstellen, deren Verwendung minimiert werden sollte und deren Einsatz durch eine verschärftere Chemikaliengesetzgebung stets strenger reglementiert wird. Darüber hinaus ist ein gravierender Nachteil herkömmlicher organischer Biozide deren Dampfdruck: die Biozide gehen in die Gasphase über und können z.B. Allergien auslösen, wobei insbesondere auch die Gefahr einer Anreicherung der Biozide in der Luft von Innenräumen besteht. Weiterhin sind organische Biozide üblicherweise nicht langzeitstabil und werden z. B. durch UV-Strahlung zersetzt.

Es gibt daher Versuche, wässrige Pigmentpasten, insbesondere für Abtönsysteme, ohne Konservierungsmittel oder Biozide bereitzustellen. Hierzu wird üblicherweise der pH-Wert der Pigmentpaste auf einen Wert von 10 oder höher eingestellt, wodurch ein Milieu geschaffen wird, in welchem viele Bakterien und Hefen sowie auch die Mehrzahl der Pilze nicht wachsen kann.

Es zeigt sich jedoch bei zunehmendem Einsatz dieser Systeme, dass es eine große Anzahl alkaliphiler Bakterien, Hefen und Pilzen, insbesondere Schimmelpilzen, existiert, die entweder unter diesen alkalischen Bedingungen gut wachsen oder sich mit Erfolg an diese Bedingungen anpassen können. Um diese alkaliphilen Keime dann zu bekämpfen, müssen wiederum Konservierungsmittel und Biozide eingesetzt werden.

Darüber hinaus ist es auch bekannt, Calciumaluminatsulfat, welches das Mineral Ettringit mit der Summenformel Ca₆Al₂[(OH)₁₂(SO₄)₃] · 26 H₂O aufweist, als Weißpigment in Anstrichfarben und der Papierbeschichtung einzusetzen. Calciumaluminatsulfat wird in Form einer wässrigen basischen Suspension vertrieben und kann insbesondere Anstrichmitteln in geringen Mengen zugesetzt werden. Ein Verfahren zur Herstellung von Präzipitaten auf Basis von Calciumaluminatsulfat ist in der WO 97/35807 A1 beschrieben. Der Einsatz von großen Mengen an Calciumaluminatsulfat in Bindemittelsystemen ist nicht möglich, da aufgrund der relativ guten Löslichkeit in Wasser und damit vorhandenen Mengen zwei- und dreiwertiger Ionen in der Dispersion Bindemittelsysteme rasch eindicken. Insbesondere wird eine Koagulation dispergierter Bestandteile, insbesondere elektrostatisch stabilisierter Bestandteile beobachtet. Die in der Lösung vorhandenen zwei- und dreiwertigen Ionen, insbesondere Aluminiumionen, führen allerdings auch dazu, dass die wässrigen Suspensionen von Calciumaluminatsulfat einen über den basischen pH-Wert hinausgehenden keimresistenten Effekt aufweisen, d.h. dass die wässrigen Suspensionen von Calciumaluminatsulfat nur schwer von Keimen aller Art, insbesondere Bakterien, Hefen oder Schimmelpilzen, befallen bzw. besiedelt werden.

Calciumaluminatsulfat hat jedoch den weiteren Nachteil, wenig dispersionsstabil zu sein und bei Verarbeitung in Farben schnell an- bzw. auszutrocknen, d.h. die offene Zeit der Farben ist sehr gering.

Aus der EP 4 183 842 A1 ist eine Zusammensetzung, insbesondere eine Pigmentpaste, bekannt, in welcher Calciumaluminatsulfat in Mengen von bis zu 20 Gew.-% langzeitstabil dispergiert werden kann. Diese Pigmentpräparationen eignen sich auch in hervorragender Weise zur Einarbeitung in Beschichtungssysteme, insbesondere Farben und Lacke, welche durch die Verwendung der Pigmentpaste auch ohne den Einsatz von Bioziden dauerhaft vor Verkeimung mit Mikroorganismen geschützt sind.

Problematisch bei der Verwendung von Calciumaluminatsulfat, insbesondere Ettringit, sowie anderen Verbindungen mit einer Löslichkeit von ca. 1 g/l ist allerdings, dass Substanzen mit derartigen Restlöslichkeiten der sogenannten Ostwald-Reifung unterliegen. Dies bedeutet zum einen, dass große Kristalle bzw. Partikel auf Kosten kleiner Kristalle bzw. Partikel wachsen, wodurch selbst stabilisierte Dispersionen bei Lagerung instabil werden; es bilden sich größere Kristalle, die zu einer stärkeren Sedimentation neigen. Darüber hinaus wachsen sich berührende Kristalle an den Grenzflächen zusammen, sodass das Sediment verhärtet und sich auch durch übliche mechanische Verfahren, wie beispielsweise Rühren, nicht mehr redispergieren lässt, insbesondere nicht mit definierten Partikelgrößen. Diese Eigenschaften sind insbesondere für die Verwendung in Pigmentpasten oder Farben problematisch, da für ein gleichmäßiges Farbbild sowie gleichmäßige Farbeigenschaften definierte Mengen an Partikeln mit definierte Partikelgrößen in einer Dispersion vorliegen müssen. Während Pigmentpasten oder auch Farben, welche Calciumaluminatsulfat oder ähnliche Substanzen mit einer relativ hohen Restlöslichkeit aufweisen, durchaus langzeitstabilisiert werden können, da sie einen recht geringen Anteil dieser problematischen Verbindungen aufweisen, ist dies bei Vorprodukten, insbesondere Halbfabrikaten, welche zur Herstellung von Pigmentpasten oder Anstrichsystemen verwendet werden, bislang nur schwer möglich, da Vorprodukte bzw. Halbfabrikate Calciumaluminatsulfat oder ähnliche Substanzen in hohen Mengenanteilen aufweisen. Insbesondere Calciumaluminatsulfat-Dispersionen neigen zu einem starken Absetzverhalten und müssen kontinuierlich gerührt werden, damit sich kein hartes Sediment bildet.

Die starke Absetzneigung führt auch in laufenden Produktionen zu Problemen, da in Zuleitungen eine Krustenbildung im unteren Bereich der Leitungen auftritt und sich in der Folge durch weiteres Kristallwachstum und Anlagerung von Partikeln die Leitungen zusetzen.

Vorprodukte, insbesondere Halbfabrikate, welche Calciumaluminatsulfat enthalten, müssen kontinuierlich gerührt oder zumindest regelmäßig aufgeführt werden. Die Anlieferung zum Produktionsstandort muss produktionsnah erfolgen unter hohem Aufwand in Logistik und Lagerhaltung, da die Qualität der Dispersion mit Lagerung ohne Rühren schnell abnimmt: So kommt es rasch zur Sedimentation und zur Bildung eines irreversiblen Bodensatzes. Dies gilt für alle Produktionsanwendungen wässriger Formulierungen von Calciumaluminatsulfat sowie allgemein von Verbindungen mit relativ hoher Restlöslichkeit, welche in einer wasserbasierten Suspension vorliegen.

Dieses problematische Verhalten verhindert auch die Anwendung von Calciumaluminatsulfat oder ähnlichen Verbindungen, wie beispielsweise Calciumsilikat-Hydrat, in weiteren technischen Gebieten, wie insbesondere der kosmetischen Formulierungen, der Desinfektionsmittel oder der pharmazeutischen Formulierungen, für welche Sie prinzipiell als Pigmente, Träger etc. geeignet wären.

Üblicherweise können Dispersionen von Feststoffen in Flüssigkeiten mittels Netz-oder Dispergiermitteln stabilisiert werden. Diese Art der Stabilisierung ist bei Verbindungen mit einer hohen Restlöslichkeit jedoch nur in geringem Maße möglich, da ein dynamisches Gleichgewicht zwischen den Partikeloberflächen und den gelösten Ionen vorliegt. Übliche Netzmittel könne nicht oder nur schlecht einwirken, da die Grenzflächen der Partikel nicht thermodynamisch stabil sind. Insbesondere eine elektrostatische Stabilisierung ist aufgrund dieser dynamischen Prozesse nicht oder nur sehr begrenzt möglich.

Es ist bekannt, dass Verdicker die Bildung fester Sedimente verzögern können, indem sie die Sedimentation sowie die Diffusion von Ionen verlangsamen; den Prozess können sie jedoch nicht aufhalten.

Darüber hinaus hat der Einsatz von Verdickern den Nachteil, dass die verdickten Lösungen aufgrund der hohen Viskosität nur schwer verarbeitbar sind und in Produktionsprozessen nach Möglichkeit niedrigviskose Dispersionen verwendet werden, insbesondere wenn die Dispersionen mittels Pumpen transportiert werden. Darüber hinaus führt der hohe Viskositätsanstieg auch zu stark eingeschränkten Produktanwendungen, da für viele Anwendungen, beispielsweise in Farben und Lacken, geringe Viskositäten gewünscht oder erforderlich sind. Insbesondere führen viele Verdicker mittels Gelbildung zu einer starken Verdickung der Dispersion, wodurch die Dispersion für viele Anwendungen nicht mehr geeignet ist. Darüber hinaus führt speziell die Anwesenheit zwei- und dreiwertiger Metallionen, wie sie in Dispersionen von Verbindungen mit hoher Restlöslichkeit oftmals in hohen Konzentrationen vorkommen, in Kombination mit Verdickern oftmals zu einer raschen Gelbildung, was die Produkte wiederum für eine Vielzahl von Anwendungen unbrauchbar macht.

Im Stand der Technik fehlt es somit weiterhin an einer Zusammensetzung oder einem Verfahren, welches eine Stabilisierung von Dispersionen von Verbindungen mit einer Löslichkeit in Wasser bei 20 °C von ca. 1 g/l bis 10 g/l ermöglicht.

Insbesondere ist es im Stand der Technik nicht bekannt, wie hoch gefüllte Dispersionen, welche einen hohen Anteil an einer Verbindung mit einer hohen Restlöslichkeit aufweisen, dauerhaft stabilisiert werden können, ohne dass sich ein fester Bodensatz bildet.

Eine Aufgabe der vorliegenden Erfindung ist somit darin zu sehen, ein System bereitzustellen, welches die zuvor genannten, mit dem Stand der Technik verbundenen Nachteile und Probleme vermeidet, zumindest jedoch abschwächt.

Insbesondere ist eine Aufgabe der vorliegenden Erfindung darin zu sehen, ein System bereitzustellen, welches die langzeitstabile Dispergierung von Verbindungen mit einer hohen Restlöslichkeit in hohen Konzentrationen ermöglicht.

Eine weitere Aufgabe der vorliegenden Erfindung ist darin zu sehen, ein System bereitzustellen, welches eine Stabilisierung von Dispersionen, welche Verbindungen mit hohen Restlöslichkeiten in hohen Konzentrationen enthalten, ermöglicht, wobei die Dispersion niedrigviskos bleibt.

Eine weitere Aufgabe der vorliegenden Erfindung ist darin zu sehen, eine niedrigviskose, langzeitstabile Dispersion einer Verbindung mit einer hohen Restlöslichkeit bereitzustellen.

Gegenstand der vorliegenden Erfindung - gemäß einem ersten Aspekt der vorliegenden Erfindung - ist somit eine wässrige Zusammensetzung nach Anspruch 1; weitere, vorteilhafte Ausgestaltungen dieses Erfindungsaspekts sind Gegenstand der diesbezüglichen Unteransprüche.

Weiterer Gegenstand der vorliegenden Erfindung - gemäß einem zweiten Aspekt der vorliegenden Erfindung - ist die Verwendung einer vorgenannten wässrigen Zusammensetzung nach Anspruch 15.

Wiederum weiterer Gegenstand der vorliegenden Erfindung - gemäß einem dritten Aspekt der vorliegenden Erfindung - ist eine wässrige Dispersion nach Anspruch 16.

Wiederum weiterer Gegenstand der vorliegenden Erfindung - gemäß einem vierten Aspekt der vorliegenden Erfindung - ist ein Verfahren nach Anspruch 17.

Es versteht sich von selbst, dass Besonderheiten, Merkmale, Ausgestaltungen und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich in Bezug auf die übrigen Erfindungsaspekte entsprechend gelten, ohne dass es einer ausdrücklichen Erwähnung bedarf.

Zudem gilt, dass bei allen nachstehend genannten relativen bzw. prozentualen, insbesondere gewichtsbezogenen Mengenangaben zu beachten ist, dass diese im Rahmen der vorliegenden Erfindung vom Fachmann derart auszuwählen sind, dass in der Summe der Inhaltsstoffe, Zusatz- bzw. Hilfsstoffe oder dergleichen stets 100 % bzw. 100 Gew.-% resultieren. Dies versteht sich für den Fachmann aber von selbst.

Zudem gilt, dass alle im Folgenden genannten Parameterangaben oder dergleichen grundsätzlich mit genormten oder explizit angegebenen Bestimmungsmethoden oder aber mit dem Fachmann an sich geläufigen Bestimmungsverfahren bestimmt bzw. ermittelt werden können.

Dies vorausgeschickt wird nachfolgend der Gegenstand der vorliegenden Erfindung näher erläutert.

Gegenstand der vorliegenden Erfindung - gemäß einem **ersten** Aspekt der vorliegenden Erfindung - ist somit eine wässrige Zusammensetzung, insbesondere Lösung oder Dispersion, zur Stabilisierung von Dispersionen, welche eine Verbindung mit einer Löslichkeit im Bereich von 0,05 bis 10 g/l bei 20 °C in Wasser aufweisen, wobei die Zusammensetzung
(a) mindestens einen Verdicker und
(b) mindestens ein Netz- oder Dispergiermittel
aufweist.

Vorzugsweise besteht die wässrige Zusammensetzung, insbesondere Lösung oder Dispersion zur Stabilisierung von Dispersionen, welche eine Verbindung mit einer Löslichkeit im Bereich von 0,05 bis 10 g/l bei 20 °C in Wasser aufweist, aus mindestens einem Verdicker, mindestens einem Netz- oder Dispergiermittel sowie Wasser.

Durch die Verwendung einer Lösung oder Dispersion, welche einen Verdicker und ein Netz- oder Dispergiermittel enthält, ist es möglich, Dispersionen von Verbindungen mit einer hohen Restlöslichkeit, insbesondere mit Löslichkeiten im Bereich von 0,05 bis 10 g/l bei 20 °C in Wasser, langzeitstabil zu dispergieren. Dies kann überraschend auch erreicht werden, wenn die Dispersion die Verbindung mit der hohen Restlöslichkeit in hohen Mengenanteilen, wie beispielsweise 70 oder 80 Gew.-%, bezogen auf die Dispersion, enthält.

Darüber hinaus lässt sich durch die erfindungsgemäße Kombination von Verdicker und Netz- oder Dispergiermittel eine stabilisierte niedrigviskose Dispersion von Verbindungen mit einer hohen Restlöslichkeit erhalten, wodurch die Dispersion industriell verarbeitet und einer Vielzahl von Anwendungen zugeführt werden kann.

Unter einer Lösung ist im Rahmen der vorliegenden Erfindung ein üblicherweise flüssiges Einphasensystem zu verstehen, in welchem mindestens ein Stoff, insbesondere eine Verbindung oder deren Bausteine, wie beispielsweise Ionen, homogen verteilt in einem weiteren Stoff, dem sogenannten Lösemittel, vorliegen. Unter einer Dispersion ist im Rahmen der vorliegenden Erfindung ein zumindest zweiphasiges System zu verstehen, wobei eine erste Phase, nämlich die dispergierte Phase, in einer zweiten Phase, der kontinuierlichen Phase, verteilt vorliegt. Die kontinuierliche Phase wird auch als Dispersionsmedium oder Dispersionsmittel bezeichnet; die kontinuierliche Phase liegt im Rahmen der vorliegenden Erfindung üblicherweise in Form einer Flüssigkeit vor und Dispersionen sind im Rahmen der vorliegenden Erfindung daher im Allgemeinen Fest-in-flüssig-Dispersionen. Die Verbindung mit einer Löslichkeit im Bereich von 0,05 bis 10 g/l bei 20 °C in Wasser ist im Rahmen der vorliegenden Erfindung üblicherweise die dispergierte Phase oder eine der dispergierten Phasen.

Überraschenderweise ist es durch den erfindungsgemäßen Ansatz auch möglich, die Ostwald-Reifung zu unterdrücken, so dass eine einmal eingestellte Partikelgröße auch langzeitstabil, insbesondere über Monate, in der Dispersion vorliegt und sich darüber hinaus kein fester und nicht mehr redispergierbarer Bodensatz in den Lagerbehältnissen bildet. Auch eine Gelbildung, welche üblicherweise beim alleinigen Einsatz von Verdickern beobachtet wird, kann im Rahmen der vorliegenden Erfindung wirkungsvoll vermieden werden, wodurch die Viskositäten der Dispersion in einem für viele Anwendungen akzeptablen Rahmen gehalten werden können. Dies ist insbesondere erstaunlich, da gerade hohe Konzentrationen von zwei- und dreiwertigen Metallionen oftmals zu einer Gelbildung in Gegenwart von Verdickern beitragen.

Die erfindungsgemäße Zusammensetzung eignet sich insbesondere zur Stabilisierung von Dispersionen auf den technischen Gebieten der Pasten, Farben, Lacke, Lasuren, Papierherstellung, kosmetischen Formulierungen, pharmazeutischen Formulierungen, flüssigen Halbfabrikate und Rohstoffe für industrielle Prozesse, Wasch- und Reinigungsmittel, Imprägnier- und Desinfektionsmittel sowie der Oberflächenausrüstung.

Besonders gute Ergebnisse werden im Rahmen der vorliegenden Erfindung erhalten, wenn die zu stabilisierende Dispersion eine Verbindung mit einer Löslichkeit von weniger als 10 g/l, insbesondere weniger 4 g/l, vorzugsweise weniger als 3 g/l, bevorzugt weniger als 2 g/l, besonders bevorzugt als 1,5 g/l, ganz besonders bevorzugt weniger als 1 g/l, bei 20 °C in Wasser aufweist.

Gleichermaßen werden besonders gute Ergebnisse erhalten, wenn die zu stabilisierende Dispersion eine Verbindung mit einer Löslichkeit von mehr als 0,1 g/l, insbesondere mehr als 0,2 g/l, vorzugsweise mehr als 0,3 g/l, bevorzugt mehr als 0,4 g/l, bei 20 °C in Wasser aufweist.

Darüber hinaus hat es sich im Rahmen der vorliegenden Erfindung bewährt, wenn die zu stabilisierende Dispersion eine Verbindung mit einer Löslichkeit im Bereich von 0,05 bis 5 g/l, insbesondere 0,1 bis 4 g/l, vorzugsweise 0,2 bis 3 g/l, bevorzugt 0,2 bis 2 g/l, besonders bevorzugt 0,3 bis 1,5 g/l, ganz besonders bevorzugt 0,4 bis 1 g/l, bei 20 °C in Wasser aufweist.

Verbindungen mit den vorgenannten relativ hohen Löslichkeiten, auch Restlöslichkeiten genannt, sind prinzipiell schwer löslich und können in Form von wässrigen Dispersionen bereitgestellt werden. Aufgrund der merklichen und nicht unbeachtlichen Löslichkeit und der damit verbundenen hohen Konzentration von Ionen in der flüssigen Phase verursachen diese Dispersionen jedoch eine Reihe von Problemen bei Produktion und Verwendung. Ein Hauptproblem ist die bereits erwähnte Ostwald-Reifung, welche sich daraus ergibt, dass die Verbindungen dynamischen Löse- und Abscheideprozessen unterliegen, wodurch sich die Partikelgröße hin zu größeren Partikeln verschiebt, was wiederum eine stärkere Sedimentationsneigung bedingt und auch die Eigenschaften der Dispersionen und sie aufweisender Pigmentpasten und Farben verändert. Darüber hinaus führen diese dynamischen Prozesse auch zu einer Agglomeratbildung und letztlich zur Bildung eines kompakten Sediments, welches auch mit üblichen mechanischen Mitteln nicht mehr redispergiert werden kann.

Darüber hinaus führt die Anwesenheit von Metallionen, insbesondere von zwei- und dreiwertigen Metallionen in hohen Konzentrationen oftmals auch zur Gelbildung durch Reaktion mit Bindemittelsystemen oder Rheologieadditiven, insbesondere Verdickern. Im Rahmen der vorliegenden Erfindung können diese negativen Auswirkungen jedoch vermieden werden.

Im Rahmen der vorliegenden Erfindung ist die Verbindung mit einer Löslichkeit im Bereich von 0,05 bis 10 g/l bei 20 °C in Wasser üblicherweise ausgewählt aus der Gruppe von Magnesiumaluminiumphosphaten, Magnesiumaluminiumsilikaten, Calciumaluminiumphosphaten, Calciumaluminiumsilikaten, Calciumaluminat-Hydraten, Calciumaluminatsulfat, Calciumsulfat, Calciumhydroxid, Calciumsilikathydrat, Ammoniumtrifluoromanganat (NH₄MnF₃), Natriumtrifluoromanganat (NaMnF₃), Mangan(II)-fluorid, Natriumfluorid und deren Mischungen.

Besonders gute Ergebnisse werden im Rahmen der vorliegenden Erfindung erhalten, wenn die Verbindung mit einer Löslichkeit im Bereich von 0,05 bis 10 g/l bei 20 °C in Wasser ausgewählt ist aus Calciumaluminat-Hydraten, Calciumaluminatsulfat, Calciumsulfat, Calciumhydroxid, Calciumsilikathydrat, Ammoniumtrifluoromanganat (NH₄MnF₃), Natriumtrifluoromanganat (NaMnF₃), Mangan(II)-fluorid, Natriumfluorid und deren Mischungen.

Besonders gute Ergebnisse werden in diesem Zusammenhang erhalten, wenn die Verbindung mit einer Löslichkeit im Bereich von 0,05 bis 10 g/l bei 20 °C in Wasser ausgewählt ist aus der Gruppe von Tricalciumaluminat-Hydrat [3 CaO * Al₂O₃ * 6 H₂O bzw. Ca₃Al₂(OH)_{12]}, Tetracalciumaluminat-Hydrat [4 CaO * Al₂O₃ * 7 H₂O bzw. Ca₄Al₂(OH)_{14]}, Calciumaluminatsulfat [Ettringit, 3 CaO * Al₂O₃ * 3 CaSO₄ * 32 H₂O bzw. Ca₆[Al(OH)₆]₂(SO₄)₂ * 26 H₂O], Calciumsulfat, Calciumhydroxid, Calciumsilikathydrat [Ca₆Si₆O₁₈ * H₂O], Ammoniumtrifluoromanganat (NH₄MnF₃), Natriumtrifluoromanganat (NaMnF₃), Mangan(II)-fluorid, Natriumfluorid und deren Mischungen. Besonders gute Ergebnisse werden in diesem Zusammenhang erhalten, wenn die Verbindung mit einer Löslichkeit im Bereich von 0,05 bis 10 g/l bei 20 °C in Wasser ausgewählt ist aus Tetracalciumaluminat-Hydrat, Calciumaluminatsulfat, Calciumsilikathydrat und deren Mischungen, vorzugsweise Calciumaluminatsulfat, Calciumsilikathydrat und deren Mischungen.

Im Rahmen der vorliegenden Erfindung wird es besonders bevorzugt, wenn die Verbindung mit einer Löslichkeit im Bereich von 0,05 bis 5 g/l bei 20 °C in Wasser Calciumaluminiumsulfat [Ettringit, 3 CaO * Al₂O₃ * 3 CaSO₄ * 32 H₂O bzw. Ca₆[Al(OH)₆]₂(SO₄)₂ * 26 H₂O] ist. Die Summenformel wird abweichend von der oben dargestellten Schreibweise mit 26 Kristallwassermolekülen auch gelegentlich mit 24 Kristallwassermolekülen angegeben. Gemeint ist jedoch stets die gleiche Verbindung.

Calciumaluminiumsulfat wird in Form wässriger Suspensionen kommerziell vertrieben. Calciumaluminatsulfat ist aus dem Mineral Ettringit aufgebaut und enthält einen Calciumoxidanteil von ca. 13,5 Gew-%, einen Aluminiumoxidanteil von ca. 8 Gew.-% und ein Kristallwassergehalt von ca. 45 Gew.-%. Calciumaluminiumsulfat bzw. Ettringit oder seine wässrige Dispersion, wird unter anderem auch vereinzelt als Weißpigment in Bautenfarben und in der Papierbeschichtung eingesetzt. Calciumaluminiumsulfat weist dabei eine hohe Deckkraft sowie ein starkes Absetz- und rasches Trocknungsverhalten auf, so dass es üblicherweise nicht hochkonzentriert in wässrigen Dispersionen, insbesondere in Anstrichmitteln eingesetzt werden kann und bereits die Verarbeitung zu den Beschichtungen problematisch ist.

Üblicherweise ist es im Rahmen der vorliegenden Erfindung vorgesehen, dass die Verbindung mit einer Löslichkeit im Bereich von 0,05 bis 10 g/l bei 20 °C in Wasser in Partikelform vorliegt.

Im Rahmen der vorliegenden Erfindung kann es gemäß einer Ausführungsform vorgesehen sein, dass die Verbindung mit einer Löslichkeit im Bereich von 0,05 bis 10 g/l bei 20 °C in Wasser eine Korngrößenverteilung D10 im Bereich von 0,05 bis 0,5 µm, insbesondere 0,1 bis 0,4 µm, vorzugsweise 0,15 bis 0,3 µm, bevorzugt 0,18 bis 0,25 µm, aufweist.

Gleichermaßen kann es vorgesehen sein, dass die Verbindung mit einer Löslichkeit im Bereich von 0,05 bis 5 g/l bei 20 °C in Wasser eine Korngrößenverteilung D50 im Bereich von 1,0 bis 4 µm, insbesondere 1,5 bis 3,0 µm, vorzugsweise 1,8 bis 2,7 µm, bevorzugt 2,0 bis 2,5 µm, aufweist.

Gleichfalls kann es vorgesehen sein, dass die Verbindung mit einer Löslichkeit im Bereich von 0,05 bis 10 g/l bei 20 °C in Wasser eine Korngrößenverteilung D90 im Bereich von 5,0 bis 10 µm, insbesondere 5,5 bis 8,0 µm, vorzugsweise 6,0 bis 7,5 µm, bevorzugt 6,5 bis 7,0 µm, aufweist.

Unter den Begriffen D10, D50 und D90 ist jeweils zu verstehen, dass 10 % aller Partikel eine geringere Partikelgröße haben bzw. 50 % aller Partikel oder 90 % aller Partikel. Die Partikelgrößen bzw. die Partikelgrößenverteilung können insbesondere über Laserstreuung ermittelt werden.

Gemäß einer besonders bevorzugten Ausführungsform der vorliegenden Erfindung weist die Verbindung mit einer Löslichkeit im Bereich von 0,05 bis 10 g/l bei 20 °C in Wasser eine Korngrößenverteilung D10 im Bereich von 0,05 bis 0,45 µm, insbesondere 0,1 bis 0,4 µm, vorzugsweise 0,15 bis 0,3 µm, bevorzugt 0,18 bis 0,25 µm, auf.

Gleichermaßen kann es gemäß dieser Ausführungsform vorgesehen sein, dass die Verbindung mit einer Löslichkeit im Bereich von 0,05 bis 10 g/l bei 20 °C in Wasser eine Korngrößenverteilung D50 im Bereich von 0,5 bis 1,8 µm, insbesondere 0,6 bis 1,5 µm, vorzugsweise 0,7 bis 1,2 µm, bevorzugt 0,8 bis 1,0 µm, aufweist.

Darüber hinaus kann es gemäß dieser Ausführungsform vorgesehen sein, dass die Verbindung mit einer Löslichkeit im Bereich von 0,05 bis 10 g/l bei 20 °C in Wasser eine Korngrößenverteilung D90 im Bereich von 2,0 bis 4 µm, insbesondere 2,2 bis 3,7 µm, vorzugsweise 2,5 bis 3,5 µm, bevorzugt 2,8 bis 3,2 µm, aufweist.

Partikeln mit den vorgenannten Partikelgrößen eignen sich in besonderer Weise zur Verwendung in Pigmentpasten und Anstrichmitteln, aber zur Papierherstellung, in kosmetischen Formulierungen, in pharmazeutischen Formulierungen, flüssigen Halbfabrikaten und Rohstoffen für industrielle Prozesse, Wasch- und Reinigungsmitteln, Imprägnier- und Desinfektionsmitteln sowie zut Oberflächenausrüstung.

Was nun den Verdicker anbelangt, so kann dieser im Rahmen der vorliegenden Erfindung aus einer Vielzahl möglicher Verbindungen ausgewählt werden.

Besonders gute Ergebnisse werden im Rahmen der vorliegenden Erfindung jedoch erhalten, wenn der Verdicker ausgewählt ist aus der Gruppe von Polysacchariden, Proteinen, Polyvinylalkoholen, Kieselsäuren, Silikaten und deren Mischungen. Besonders bevorzugt ist es im Rahmen der vorliegenden Erfindung, wenn der Verdicker ein Polysaccharid ist.

Gemäß einer bevorzugten Ausführungsform der vorliegenden Erfindung ist der Verdicker ausgewählt aus der Gruppe von Xanthan Gum, beta-Glucanen, thiolisierten Polysacchariden, Proteoglycanen, Gummi arabicum, Karaya, Tragant, Johannisbrotkernmehl, Guar, Quittenschleim, Pektin, Agar-Agar, Carrageen, Alginaten, Stärken, Stärkederivaten, Cellulose, Cellulosederivaten, insbesondere Celluloseethern, Kieselsäuren, Bentoniten, Schichtsilikaten, Polyvinylalkoholen, Gelatine, Casein und deren Mischungen. Besonders gute Ergebnisse werden in diesem Zusammenhang erhalten, wenn der Verdicker ausgewählt ist aus der Gruppe von Xanthan Gum, beta-Glucanen, thiolisierten Polysacchariden, Proteoglycanen, Celluloseethern, Kieselsäuren, Bentoniten, Schichtsilikaten, Polyvinylalkoholen, Gelatine, Casein und deren Mischungen. Beste Ergebnisse werden im Rahmen der vorliegenden Erfindung erhalten, wenn der Verdicker ein Celluloseether ist.

Wenn der Verdicker eine Celluloseether ist, so hat es sich besonders bewährt, wenn der Verdicker ausgewählt ist aus der Gruppe von Carboxymethylcellulose (CMC), Methylcellulose (MC), Ethylcellulose (EC), Hydroxyethylcellulose (HEC), Hydroxypropylcellulose (HPC), Methylethylcellulose (MEC), Hydroxyethylmethylcellulose (HEMC), Hydroxypropylmethylcellulose (HPMC), Ethylhydroxyethylcellulose und deren Mischungen.

Was das Netz- oder Dispergiermittel in der erfindungsgemäßen wässrigen Zusammensetzung anbelangt, so ist dies üblicherweise ausgewählt aus der Gruppe von nicht-ionischen Polymeren, kationischen Polymeren, anionischen Polymeren und deren Mischungen, insbesondere nichtionischen Polymeren, anionischen Polymeren, Copolymeren mit pigmentaffinen Gruppen, Polyethern und deren Mischungen. Als Netz- oder Dispergiermittel können somit eine große Anzahl oberflächenaktiver Substanzen, eingesetzt werden. Besonders bevorzugt werden Netz- oder Dispergiermittel mit pigmentaffinen Gruppen verwendet.

Besonders gute Ergebnisse werden im Rahmen der vorliegenden Erfindung erhalten, wenn das Netz- oder Dispergiermittel ausgewählt ist aus der Gruppe von Polymeren mit pigmentaffinen Gruppen, silikonmodifizierten Polymeren, Block-Copolymeren, Pfropf-Copolymeren, Tensiden, modifizierten natürlichen Ölen und deren Mischungen.

Darüber hinaus hat es sich im Rahmen der vorliegenden Erfindung bewährt, wenn das Netz- oder Dispergiermittel ausgewählt ist aus der Gruppe von Polycarboxylaten, insbesondere Salzen von Polyacrylsäuren, Polyphosphaten, insbesondere linearen Polyphosphaten und/oder cyclischen Metaphosphaten, Polyetherphosphaten, Polycarbonsäurepolymeren, Acrylblock-Copolymeren, Polyurethanen, ethoxylierten Fettalkoholen, nichtionischen gesättigten langkettigen Alkoholen, Fettalkoholsulfaten, Alkylphosphonaten, Polysiloxanethern, insbesondere Methoxypolyethoxypropyltrisiloxanen, Alkindiolethoxylaten, Tensiden, Geminitensiden, Bola-Tensiden, Fluortensiden, modifizierten natürlichen Ölen und deren Mischungen.

Weiterhin hat es sich bewährt, wenn das Netz- oder Dispergiermittel ausgewählt ist aus der Gruppe von Salzen von Polyacrylsäuren, Polyphosphaten, insbesondere linearen Polyphosphaten und/oder cyclischen Metaphosphaten, Polyetherphosphaten, Polycarbonsäurepolymeren, Acrylblock-Copolymeren,Polyurethanen, ethoxylierten Fettalkoholen, nichtionischen gesättigten langkettigen Alkoholen, Fettalkoholsulfaten, Alkylphosphonaten, Polysiloxanethern, insbesondere Methoxypolyethoxypropyltrisiloxanen, Alkindiolethoxylaten, Geminitensiden, Bola-Tensiden, modifizierten natürlichen Ölen und deren Mischungen.

Gemäß einer bevorzugten Ausführungsform der vorliegenden Erfindung ist es vorgesehen, dass das Netz- oder Dispergiermittel ausgewählt ist aus der Gruppe von Natriumsalzen von Polyacrylsäuren, Ammoniumsalzen von Polyacrylsäuren, Polyetherphosphaten, Polycarbonsäurepolymeren, modifizierten Styrol-Maleinsäure-Copolymeren, Polysiloxanethern, insbesondere Methoxypolyethoxypropyltrisiloxanen, Geminitensiden, Bola-Tensiden, modifizierten natürlichen Ölen und deren Mischungen.

Beste Ergebnisse werden im Rahmen der vorliegenden Erfindung erhalten, wenn das Netz- oder Dispergiermittel ein modifiziertes Styrol-Maleinsäure-Copolymer ist.

Vorzugsweise sind die Polymere der vorgenannten Netz- oder Dispergiermittel funktionalisiert, insbesondere sauer und/oder basisch funktionalisiert. Bevorzugt, weist das Polymer mindestens eine funktionelle Gruppe auf, welche insbesondere ausgewählt sein kann aus der Gruppe von Hydroxyl-(-OH), Thiol- (-SH), Amin-, Ammonium-, Carboxyl-, Carbonyl-, Ester-, Ether-, Sulfonyl-, Phosphonsäure, Phosphorsäure- und/oder Phosphorsäureester-Funktionen, vorzugsweise Hydroxyl-(-OH), Thiol- (-SH) und/oder Amin-Funktionen.

Das Molgewicht des eingesetzten Netz- oder Dispergiermittels kann gleichermaßen in weiten Bereichen variieren. Üblicherweise weist das eingesetzte Netz- oder Dispergiermittel ein mittleres, insbesondere gewichtsmittleres Molekulargewicht von mindestens 1.000 g/mol, vorzugsweise mindestens 1.500 g/mol, auf. Im Allgemeinen weist das Netz- oder Dispergiermittel ein mittleres, insbesondere gewichtsmittleres Molekulargewicht im Bereich von 1.000 bis 1.000.000 g/mol, insbesondere 1.250 bis 100.000 g/mol, vorzugsweise 1.500 bis 75.000 g/mol, besonders bevorzugt 2.000 bis 50.000 g/mol, auf.

Vorteilhafterweise ist das Netz- oder Dispergiermittel auf Basis eines funktionalisierten, insbesondere sauer und/oder basisch funktionalisierten, Polymers, insbesondere mit polaren funktionellen Gruppen, ausgebildet. Beispielsweise kann das Netz- oder Dispergiermittel aus der Gruppe von funktionalisierten Polyaminen, funktionalisierten Polyurethanen, funktionalisierten Poly(meth)acrylaten, funktionalisierten Vinylcopolymeren, funktionalisierten Polyether/Polyester-Copolymeren, funktionalisierten Polyethern, funktionalisierten Polyestern, funktionalisierten Fettsäurecopolymeren, funktionalisierten Block-copolymeren und/oder funktionalisierten Polyalkoxylaten sowie Mischungen oder Kombinationen von mindestens zwei dieser Verbindungen ausgewählt sein.

Die Polymere der vorgenannten Netz- oder Dispergiermittel sind dabei vorzugsweise sauer und/oder basisch funktionalisiert., Bevorzugt weist das Polymer mindestens eine funktionelle Gruppe auf, welche insbesondere ausgewählt sein kann aus der Gruppe von Hydroxyl-(-OH), Thiol- (-SH), Amin-, Ammonium-, Carboxyl-, Carbonyl-, Ester-, Ether-, Sulfonyl-, Phosphonsäure, Phosphorsäure- und/oder Phosphorsäureester-Funktionen, vorzugsweise Hydroxyl- (-OH), Thiol- (-SH) und/oder Amin-Funktionen.

In bevorzugter Weise kann das Netz- oder Dispergiermittel aus den nachfolgend genannten Dispergier- und/oder Netzmitteln ausgewählt sein, wie sie in den nachfolgend aufgeführten Druckschriften beschrieben sind, deren jeweiliger Offenbarungsgehalt hiermit durch Bezugnahme eingeschlossen ist:
- Polyurethane gemäß EP 0 154 678 A und EP 0 318 999 A;
- Polyurethane gemäß EP 0 270 126 A;
- modifizierte Polyurethane und Polyamine gemäß EP 1 593 700 A;
- versalzte Polyamine gemäß EP 0 893 155 A;
- Phosphorsäureester gemäß EP 0 417 490 A;
- verzweigte, Imidazolgruppen enthaltende Polymere gemäß EP 1 081 169 A;
- Ethoxylate, insbesondere alkoxylierte Epoxid/Amin-Adukte, gemäß EP 1 650 246 A und Epoxid-Adukte gemäß EP 1 486 524 A;
- Copolymerisate mit Fettsäure gemäß EP 1 640 389 A;
- umgeesterte Polyacrylate gemäß EP 0 879 860 A;
- säurefunktionelle Polyester gemäß WO 2005/097872 A;
- Blockcopolymere (Gradientencopolymere) gemäß EP 1 416 019 A.

Wie zuvor bereits ausgeführt, kann durch die erfindungsgemäße Kombination von Verdicker einerseits und Netz- oder Dispergiermittel andererseits eine Stabilisierung von hochgefüllten Dispersionen von Verbindungen mit hoher Restlöslichkeit erreicht werden, wobei insbesondere langzeitstabile niedrigviskose Dispersionen erhalten werden können.

Im Rahmen der vorliegenden Erfindung hat es sich besonders bewährt, wenn die Zusammensetzung den Verdicker und das Netz- oder Dispergiermittel in definierten Verhältnissen zueinander enthält.

Besonders gute Ergebnisse werden erhalten, wenn die Zusammensetzung ein gewichtsbezogenes Verhältnis von Verdicker zu Netz- oder Dispergiermittel (Verdicker: Netz- oder Dispergiermittel) im Bereich von 2 : 1 bis 1: 20, insbesondere 1 : 1 bis 1 : 15, vorzugsweise 1 : 1 bis 1 : 10, bevorzugt 1 : 2 bis 1 : 8, besonders bevorzugt 1 : 3 bis 1 : 5, aufweist.

Die erfindungsgemäße wässrige Zusammensetzung weist somit vorzugsweise eine deutlich größere Menge an Netz- oder Dispergiermittel im Vergleich zum Verdicker auf. Trotzdem ist die Anwesenheit eines Verdickers essenziell, um die Ostwald-Reifung zu unterbinden und langzeitstabile Dispersionen zu erhalten.

Was die Menge anbelangt, in welcher die Zusammensetzung den Verdicker aufweist, so hat es sich bewährt, wenn die Zusammensetzung den Verdicker in Mengen von bis zu 20 Gew.-%, insbesondere bis zu 18 Gew.-%, vorzugsweise bis zu 15 Gew.-%, bevorzugt bis zu 12 Gew.-%, bezogen auf die Zusammensetzung, aufweist.

Gleichermaßen kann es vorgesehen sein, dass die Zusammensetzung den Verdicker in Mengen von mehr als 1 Gew.-%, insbesondere mehr als 2 Gew.-%, vorzugsweise mehr als 5 Gew.-%, bevorzugt mehr als 8 Gew.-%, bezogen auf die Zusammensetzung, aufweist.

Darüber hinaus hat es sich im Rahmen der vorliegenden Erfindung bewährt, wenn die Zusammensetzung den Verdicker in Mengen von 1 bis 20 Gew.-%, insbesondere 2 bis 18 Gew.-%, vorzugsweise 5 bis 15 Gew.-%, bevorzugt 8 bis 12 Gew.-%, bezogen auf die Zusammensetzung, aufweist.

Was nun die Menge anbelangt, in welcher die Zusammensetzung das Netz- oder Dispergiermittel enthält, so kann dieses naturgemäß in weiten Bereichen variieren. Es hat sich jedoch bewährt, wenn die Zusammensetzung das Netz- oder Dispergiermittel in Mengen von bis zu 65 Gew.-%, insbesondere bis zu 60 Gew.-%, vorzugsweise bis zu 55 Gew.-%, bevorzugt bis zu 50 Gew.-%, bezogen auf die Zusammensetzung, aufweist.

Gleichermaßen kann es im Rahmen der vorliegenden Erfindung vorgesehen sein, dass die Zusammensetzung das Netz- oder Dispergiermittel in Mengen von mehr als 20 Gew.-%, insbesondere mehr als 25 Gew.-%, vorzugsweise mehr als 30 Gew.-%, bevorzugt mehr als 35 Gew.-%, bezogen auf die Zusammensetzung, aufweist.

Gemäß einer bevorzugten Ausführungsform der vorliegenden Erfindung weist die Zusammensetzung das Netz- oder Dispergiermittel in Mengen von 20 bis 65 Gew.-%, insbesondere 25 bis 60 Gew.-%, vorzugsweise 30 bis 55 Gew.-%, bevorzugt 35 bis 50 Gew.-%, bezogen auf die Zusammensetzung, aufweist.

Mit Verdickern sowie Netz- und Dispergiermitteln in den vorgenannten Mengen lässt sich eine Lösung oder Dispersion erhalten, welche sich hervorragend als Additiv zur Stabilisierung von Dispersionen, welche hohe Mengenanteile einer Verbindung mit hoher Restlöslichkeit aufweist, eignet.

Wie zuvor bereits ausgeführt, ist die Zusammensetzung eine wässrige Zusammensetzung. In diesem Zusammenhang hat es sich bewährt, wenn die Zusammensetzung Wasser in Mengen von bis zu 79 Gew.-%, insbesondere bis zu 78 Gew.-%, vorzugsweise bis zu 63 Gew.-%, bevorzugt bis zu 57 Gew.-%, bezogen auf die Zusammensetzung, aufweist.

Gleichermaßen kann es vorgesehen sein, dass die Zusammensetzung Wasser in Mengen von mindestens 15 Gew.-%, insbesondere mindestens 30 Gew.-%, vorzugsweise mindestens 38 Gew.-%, bezogen auf die Zusammensetzung, aufweist.

Darüber hinaus kann es im Rahmen der vorliegenden Erfindung auch vorgesehen sein, dass die Zusammensetzung Wasser in Mengen 15 bis 79 Gew.-%, insbesondere 30 bis 78 Gew.-%, vorzugsweise 30 bis 63 Gew.-%, bevorzugt 38 bis 57 Gew.-%, bezogen auf die Zusammensetzung, aufweist.

Gemäß einer bevorzugten Ausführungsform der vorliegenden Erfindung weist die Zusammensetzung
(a) mindestens einen Verdicker, insbesondere in Mengen von 1 bis 20 Gew.-%,
(b) mindestens ein Netz- oder Dispergiermittel, insbesondere in Mengen von 20 bis 65 Gew.-%, und
(c) Wasser, insbesondere in Mengen von 15 bis 79 Gew.-%, jeweils bezogen auf die Zusammensetzung, auf.

Für diese besondere bevorzugte Ausführungsform der vorliegenden Erfindung gelten alle zuvor genannten Parameter, Merkmale, Vorteile und Besonderheiten entsprechend. Gemäß einer wiederum bevorzugten Ausführungsform der vorliegenden Erfindung besteht die Zusammensetzung aus den vorgenannten Komponenten (a) bis (c).

Es zeigen die Figurendarstellungen gemäß
- Fig. 1:: Das Sedimentationsprofil einer handelsüblichen Calciumaluminatsulfat-Suspension;
- Fig. 2:: den Stabilitätsindex einer handelsüblichen Calciumaluminatsulfat-Suspension zum Zeitpunkt t = 500 s;
- Fig. 3:: die Stabilitätsindizes einer handelsüblichen Calciumaluminatsulfat-Suspension im Vergleich zu erfindungsgemäß stabilisierten Calciumaluminatsulfat-Suspensionen zum Zeitpunkt t = 500 s;
- Fig. 4:: die Stabilitätsindizes einer handelsüblichen Calciumaluminatsulfat-Suspension im Vergleich zu erfindungsgemäß stabilisierten Calciumaluminatsulfat-Suspensionen in Abhängigkeit von der Zeit;
- Fig. 5:: die Stabilitätsindizes einer handelsüblichen Calciumaluminatsulfat-Suspension, einer erfindungsgemäß stabilisierten Calciumaluminatsulfat-Suspensionen und von Vergleichssuspensionen, welche neben Calciumaluminat nur einen Verdicker aufweisen, zum Zeitpunkt t = 500 s;
- Fig. 6:: die Stabilitätsindizes einer handelsüblichen Calciumsilikat-Hydrat-Suspension im Vergleich zu einer erfindungsgemäß stabilisierten Calciumsilikat-Hydrat-Suspensionen zum Zeitpunkt t = 500 s; und

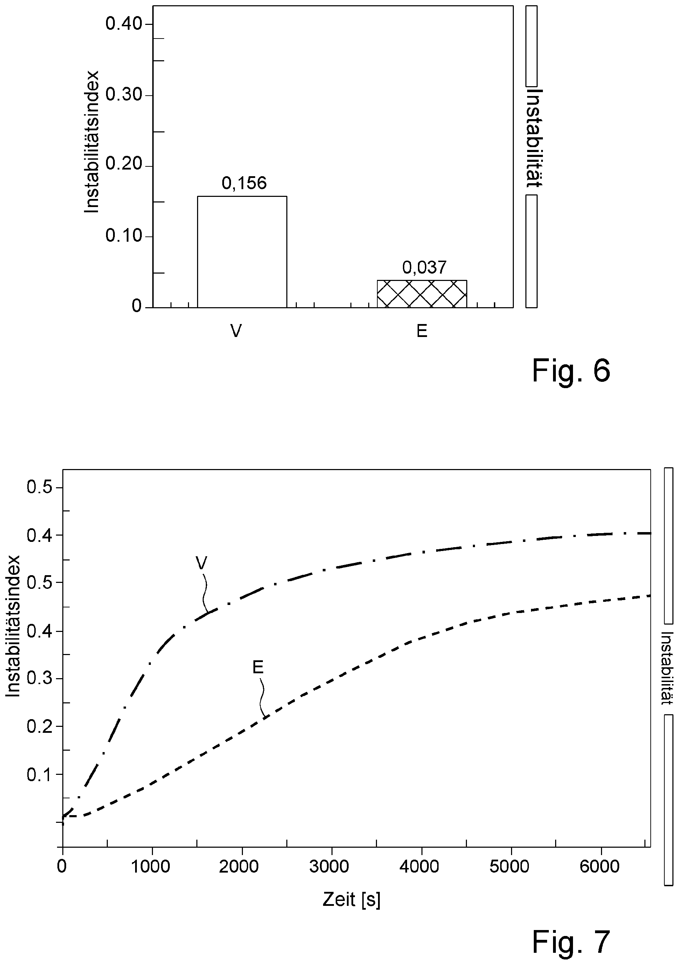

- Fig. 6:: die Stabilitätsindizes einer handelsüblichen Calciumsilikat-Hydrat-Suspension im Vergleich zu einer erfindungsgemäß stabilisierten Calciumsilikat-Hydrat-Suspensionen in Abhängigkeit von der Zeit.

Weiterer Gegenstand der vorliegenden Erfindung - gemäß einem **zweiten** Aspekt der vorliegenden Erfindung - ist die Verwendung einer zuvor genannten wässrigen Zusammensetzung zur Stabilisierung einer wässrigen Dispersion, welche mindestens eine Verbindung mit einer Löslichkeit im Bereich von 0,05 bis 10 g/l, insbesondere 05 bis 5 g/l, vorzugsweise 0,1 bis 4 g/l, bevorzugt 0,2 bis 3 g/l, besonders bevorzugt 0,2 bis 2 g/l, ganz besonders bevorzugt 0,3 bis 1,5 g/l, insbesondere bevorzugt 0,4 bis 1 g/l, bei 20 °C in Wasser enthält.

Für weitere Einzelheiten zu der erfindungsgemäßen Verwendung kann auf die obigen Ausführungen zu der erfindungsgemäßen wässrigen Zusammensetzung verwiesen werden, welche im Hinblick auf die erfindungsgemäße Verwendung entsprechend gelten.

Wiederum weiterer Gegenstand der vorliegenden Erfindung - gemäß einem **dritten** Aspekt der vorliegenden Erfindung - ist eine wässrige Dispersion, insbesondere ein Halbfabrikat, enthaltend
(i) mindestens eine Verbindung mit einer Löslichkeit in Wasser bei 20 °C im Bereich von 0,05 bis 10 g/l,
(ii) mindestens einen Verdicker und
(iii) mindestens ein Netz- oder Dispergiermittel.

Die erfindungsgemäße wässrige Dispersion wird insbesondere erhalten, indem die zuvor genannte wässrige Zusammensetzung mit einer Verbindung mit einer Löslichkeit in Wasser bei 20 °C im Bereich von 0,05 bis 10 g/l versetzt wird oder indem eine Dispersion, insbesondere Suspension, einer Verbindung mit einer Löslichkeit in Wasser bei 20 °C im Bereich von 0,05 bis 10 g/l mit der zuvor beschriebenen wässrigen Zusammensetzung versetzt wird. Alternativ können Verdicker und Netz- oder Dispergiermittel auch einer wässrigen Dispersion einer Verbindung mit einer Löslichkeit in Wasser bei 20 °C im Bereich von 0,05 bis 10 g/l getrennt voneinander zugegeben werden, wobei diese Variante erfindungsgemäß weniger bevorzugt ist.

Überraschenderweise ist es im Rahmen der vorliegenden Erfindung möglich, die zuvor genannte wässrige Zusammensetzung, enthaltend mindestens einen Verdicker und mindestens ein Netz- oder Dispergiermittel, unter Eintrag geringer Scherkräfte in Dispersionen, insbesondere Suspensionen von Verbindungen mit einer Löslichkeit in Wasser bei 20 °C im Bereich von 0,05 bis 10 g/l, welche oftmals hochalkalisch sind, einzuarbeiten. Der Fachmann würde einen starken Anstieg der Viskosität und ggf. eine Gelbildung durch den Verdicker erwarten.

Im Rahmen der vorliegenden Erfindung ist es vorteilhafter Weise vorgesehen, dass die wässrige Dispersion eine Verbindung mit einer Löslichkeit von weniger als 5 g/l, insbesondere weniger als 4 g/l, vorzugsweise weniger als 3 g/l, bevorzugt weniger als 2 g/l, besonders bevorzugt weniger als 1,5 g/l, ganz besonders bevorzugt weniger als 1 g/l, bei 20 °C in Wasser aufweist.

Gleichermaßen kann es vorgesehen sein, dass die wässrige Dispersion eine Verbindung mit einer Löslichkeit von mehr als 0,1 g/l, insbesondere mehr als 0,2 g/l, vorzugsweise mehr als 0,3 g/l, bevorzugt mehr als 0,4 g/l, bei 20 °C in Wasser aufweist.

Im Rahmen der vorliegenden Erfindung hat es sich bewährt, wenn die wässrige Dispersion eine Verbindung mit einer Löslichkeit im Bereich 0,05 bis 5 g/l, insbesondere 0,1 bis 4 g/l, vorzugsweise 0,2 bis 3 g/l, bevorzugt 0,2 bis 2 g/l, besonders bevorzugt 0,3 bis 1,5 g/l, ganz besonders bevorzugt 0,4 bis 1 g/l, bei 20 °C in Wasser aufweist.

Im Rahmen der vorliegenden Erfindung ist es darüber hinaus üblicherweise vorgesehen, dass die wässrige Dispersion die Verbindung mit einer Löslichkeit in Wasser bei 20 °C im Bereich von 0,05 bis 10 g/l, d.h. mit einer hohen Restlöslichkeit, in Mengen von 40 bis 80 Gew.-%, insbesondere 50 bis 75 Gew.-%, vorzugsweise 55 bis 70 Gew.-%, bevorzugt 60 bis 65 Gew.-%, bezogen auf die wässrige Dispersion, aufweist.

Die erfindungsgemäße Dispersion kann somit die Verbindung mit einer Löslichkeit im Bereich von 0,05 bis 10 g/l bei 20 °C in Wasser in sehr hohen Mengen erhalten, ohne dass die Eigenschaften der Systeme, in welche die erfindungsgemäße Dispersion eingearbeitet wird oder deren Basis sie bildet, gegenüber üblichen Systemen verändert bzw. verschlechtert wird.

Wie zuvor bereits ausgeführt, liegt die Verbindung mit einer Löslichkeit im Bereich von 0,05 bis 10 g/l bei 20 °C in Wasser Rahmen der vorliegenden Erfindung in Partikelform vor.

Im Rahmen der vorliegenden Erfindung kann es gemäß einer Ausführungsform vorgesehen sein, dass die Verbindung mit einer Löslichkeit im Bereich von 0,05 bis 10 g/l bei 20 °C in Wasser eine Korngrößenverteilung D10 im Bereich von 0,05 bis 0,5 µm, insbesondere 0,1 bis 0,4 µm, vorzugsweise 0,15 bis 0,3 µm, bevorzugt 0,18 bis 0,25 µm, aufweist.

Gleichermaßen kann es vorgesehen sein, dass die Verbindung mit einer Löslichkeit im Bereich von 0,05 bis 10 g/l bei 20 °C in Wasser eine Korngrößenverteilung D50 im Bereich von 1,0 bis 4 µm, insbesondere 1,5 bis 3,0 µm, vorzugsweise 1,8 bis 2,7 µm, bevorzugt 2,0 bis 2,5 µm, aufweist.

Gleichfalls kann es vorgesehen sein, dass die Verbindung mit einer Löslichkeit im Bereich von 0,05 bis 10 g/l bei 20 °C in Wasser eine Korngrößenverteilung D90 im Bereich von 5,0 bis 10 µm, insbesondere 5,5 bis 8,0 µm, vorzugsweise 6,0 bis 7,5 µm, bevorzugt 6,5 bis 7,0 µm, aufweist.

Unter den Begriffen D10, D50 und D90 ist jeweils zu verstehen, dass 10 % aller Partikel eine geringere Partikelgröße haben bzw. 50 % aller Partikel oder 90 % aller Partikel. Die Partikelgrößen bzw. die Partikelgrößenverteilung können insbesondere über Laserstreuung ermittelt werden.

Gemäß dieser Ausführungsform wird es besonders bevorzugt, wenn die Verbindung mit einer Löslichkeit im Bereich von 0,05 bis 10 g/l bei 20 °C in Wasser eine Korngrößenverteilung D10 von 0,2 µm, eine Korngrößenverteilung D50 von 2 bis 2,5 µm und eine Korngrößenverteilung D90 von 6,8 µm aufweist. Mit den vorgenannten Partikelgrößenverteilungen lassen sich insbesondere bei Verwendung von Calciumaluminiumsulfat (Ettringit) matte Pigmentpasten und Anstrichmittel mit einer hohen Deckkraft erhalten.

Gemäß einer besonders bevorzugten Ausführungsform der vorliegenden Erfindung weist die Verbindung mit einer Löslichkeit im Bereich von 0,05 bis 10 g/l bei 20 °C in Wasser eine Korngrößenverteilung D10 im Bereich von 0,05 bis 0,45 µm, insbesondere 0,1 bis 0,4 µm, vorzugsweise 0,15 bis 0,3 µm, bevorzugt 0,18 bis 0,25 µm, auf.

Gleichermaßen kann es gemäß dieser Ausführungsform vorgesehen sein, dass die Verbindung mit einer Löslichkeit im Bereich von 0,05 bis 10 g/l bei 20 °C in Wasser eine Korngrößenverteilung D50 im Bereich von 0,5 bis 1,8 µm, insbesondere 0,6 bis 1,5 µm, vorzugsweise 0,7 bis 1,2 µm, bevorzugt 0,8 bis 1,0 µm, aufweist.

Darüber hinaus kann es gemäß dieser Ausführungsform vorgesehen sein, dass die Verbindung mit einer Löslichkeit im Bereich von 0,05 bis 10 g/l bei 20 °C in Wasser eine Korngrößenverteilung D90 im Bereich von 2,0 bis 4 µm, insbesondere 2,2 bis 3,7 µm, vorzugsweise 2,5 bis 3,5 µm, bevorzugt 2,8 bis 3,2 µm, aufweist.

Ganz besonders bevorzugt wird es im Rahmen dieser bevorzugten Ausführungsform, wenn die Verbindung mit einer Löslichkeit im Bereich von 0,05 bis 10 g/l bei 20 °C in Wasser eine Korngrößenverteilung D10 von 0,2 µm, eine Korngrößenverteilung D50 von 0,9 µm und eine Korngrößenverteilung D90 von 3,0 µm, aufweist. Mit diesen im Vergleich zur zuvor geschilderten Ausführungsform kleineren Partikelgrößen und engeren Partikelgrößenverteilung ist es insbesondere bei Verwendung von Calciumaluminatsulfat möglich, brillante Farbpasten zu erzeugen, die Standardpigmentpasten in Mengen von 15 Gew.-% oder mehr hinzugegeben werden können, ohne dass die Brillanz der Farbe, der Farbort oder die Farbintensität merklich geändert werden. Auch können die erfindungsgemäßen Dispersionen Farben, Lacken und Lasuren, kosmetischen und pharmazeutischen Zusammensetzungen, flüssigen Halbfabrikaten und Rohstoffen für industrielle Prozesse, Wasch- und Reinigungsmitteln, Imprägnier- und Desinfektionsmittel zugegeben werden, wobei sich langzeitstabile Dispersionen erhalten lassen.

Gemäß einer besonderen Ausführungsform der vorliegenden Erfindung weist die Verbindung mit einer Löslichkeit im Bereich von 0,05 bis 10 g/l bei 20 °C in Wasser eine bimodale Teilchengrößenverteilung auf. Insbesondere weist die Verbindung mit einer Löslichkeit im Bereich von 0,05 bis 10 g/l bei 20 °C in Wasser eine bimodale Teilchengrößenverteilung mit den Teilchengrößen und Teilchengrößenverteilung gemäß den zuvor beschriebenen unterschiedlichen Ausführungsformen auf. Auf diese Art sind beispielsweise Farbraum, Farbort, Farbintensität sowie die Brillanz der Zusammensetzung, insbesondere von Pigmentpasten sowie daraus resultierender Anstrichmittel, gezielt einstell- und festlegbar.

Im Rahmen der vorliegenden Erfindung ist es dadurch möglich, üblicherweise hoch instabile Dispersionen von Verbindungen mit hoher Restlöslichkeit, speziell auch Halbfabrikate, zu stabilisieren, so dass diese problemlos gelagert und weiterverarbeitet werden können. Das erfindungsgemäße System ist insbesondere zur Stabilisierung von Calciumaluminatsulfat, speziell Ettringit, geeignet, jedoch ist dieses Prinzip auch auf beliebige andere, insbesondere anorganische, Verbindungen mit hoher Restlöslichkeit in wässrigen Medien übertragbar.

Im Rahmen der vorliegenden Erfindung ist es üblicherweise vorgesehen, dass die wässrige Dispersion den Verdicker in Mengen von 0,01 bis 5 Gew.-%, insbesondere 0,05 bis 2 Gew.-%, vorzugsweise 0,1 bis 1 Gew.-%, bevorzugt 0,1 bis 0,5 Gew.-%, bezogen auf die Dispersion, aufweist.

Gleichermaßen kann es vorgesehen sein, dass Dispersion den Verdicker in Mengen von mindestens 0,1 Gew.-%, insbesondere mindestens 0,5 Gew.-%, vorzugsweise mindestens 0,1 Gew.-%, bezogen auf die Dispersion, aufweist. Darüber hinaus hat es sich gleichermaßen bewährt, wenn die Dispersion den Verdicker in Mengen von höchstens 5 Gew.-%, insbesondere höchstens 2 Gew.-%, vorzugsweise höchstens 1 Gew.-%, bevorzugt höchstens 0,5 Gew.-%, bezogen auf die Dispersion, aufweist.

Weiterhin kann es im Rahmen der vorliegenden Erfindung vorgesehen sein, dass die Dispersion das Netz- oder Dispergiermittel in Mengen von mindestens 0,1 Gew.-%, insbesondere mindestens 0,2 Gew.-%, vorzugsweise mindestens 0,3 Gew.-%, bevorzugt 0,5 Gew.-%, bezogen auf die Dispersion, aufweist.

Gute Ergebnisse werden gleichfalls erhalten, wenn die Dispersion das Netz- oder Dispergiermittel in Mengen von höchstens 8 Gew.-%, insbesondere höchstens 5 Gew.-%, vorzugsweise höchstens 2 Gew.-%, bevorzugt höchstens 1 Gew.-%, bezogen auf die Dispersion, aufweist.

Im Rahmen der vorliegenden Erfindung hat es sich darüber hinaus bewährt, wenn die Dispersion das Netz- oder Dispergiermittel in Mengen von 0,1 bis 8 Gew.-%, insbesondere 0,2 bis 5 Gew.-%, vorzugsweise 0,3 bis 2 Gew.-%, bevorzugt 0,5 bis 1 Gew.-%, bezogen auf die Dispersion, aufweist.

Auch die wässrige Dispersion enthält Wasser in signifikanten Menten. Im Rahmen der vorliegenden Erfindung kann es vorgesehen sein, dass die wässrige Dispersion Wasser in Mengen von mindestens 5 Gew.-%, insbesondere mindestens 15 Gew.-%, vorzugsweise mindestens 25 Gew.-%, bevorzugt mindestens 35 Gew.-%, bezogen auf die Dispersion, aufweist.

Gleichermaßen kann es vorgesehen sein, dass die wässrige Dispersion Wasser in Mengen von höchstens 60 Gew.-%, insbesondere höchstens 55 Gew.-%, vorzugsweise höchstens 50 Gew.-%, bevorzugt höchstens 45 Gew.-%, bezogen auf die Dispersion, aufweist.

Besonders gute Ergebnisse werden im Rahmen der vorliegenden Erfindung erhalten, wenn die wässrige Dispersion Wasser in Mengen von 5 bis 60 Gew.-%, insbesondere 15 bis 55 Gew.-%, vorzugsweise 25 bis 50 Gew.-%, bevorzugt 35 bis 45 Gew.-%, bezogen auf die Dispersion, aufweist.

Gemäß einer bevorzugten Ausführungsform enthält die wässrige Dispersion somit
(i) die Verbindung mit einer Löslichkeit von weniger als 10 g/l, insbesondere in Mengen von 40 bis 80 Gew.-%,
(ii) mindestens einen Verdicker, insbesondere in Mengen von 0,1 bis 5 Gew.-%,
(iii) mindestens ein Netz- oder Dispergiermittel, insbesondere in Mengen von 0,1 bis 8 Gew.-%, und
(iv) Wasser, insbesondere in Mengen von 5 bis 60 Gew.-%, jeweils bezogen auf die Dispersion.

Für diese bevorzugte Ausführungsform der vorliegenden Erfindung gelten alle Parameter, Merkmale, Vorteile und Besonderheiten, welche zuvor im Zusammenhang mit anderen Ausführungsformen genannt wurden, entsprechend.

Im Rahmen der vorliegenden Erfindung ist es insbesondere üblicherweise vorgesehen, dass die Dispersion ein pH-Stellmittel aufweist. Bei einem pH-Stellmittel wird der pH-Wert insbesondere auf besonders bevorzugte Bereiche sowohl für die Stabilität der Dispersion als auch zur Verhinderung eines Befalls mit Keimen eingestellt.

Das pH-Stellmittel ist dabei üblicherweise ausgewählt aus anorganischen und organischen Säuren und Basen, insbesondere anorganischen und organischen Basen, vorzugsweise anorganischen Basen.

Wenn die Dispersion ein pH-Stellmittel enthält, so hat es sich bewährt, wenn das pH-Stellmittel ausgewählt ist aus der Gruppe von Salzsäure, Schwefelsäure, Salpetersäure, Zitronensäure, Pyridincarbonsäure, Essigsäure, Natriumhydroxid, Kaliumhydroxid, Lithiumhydroxid, Calciumhydroxid, Ammoniak, Wasserglas, Dimethylglucamin und deren Mischungen. Vorzugsweise ist das pH-Stellmittel ausgewählt aus der Gruppe von Natriumhydroxid, Kaliumhydroxid, Lithiumhydroxid, Calciumhydroxid, Ammoniak, Wasserglas, Dimethylglucamin und deren Mischungen.

Wenn die Dispersion ein pH-Stellmittel enthält, so enthält die Zusammensetzung das pH-Stellmittel üblicherweise in Mengen von 0,01 bis 10 Gew.-%, insbesondere 0,1 bis 8 Gew.-%, vorzugsweise 0,5 bis 7 Gew.-%, bevorzugt 1 bis 5 Gew.-%, bezogen auf die Dispersion.

Gemäß einer wiederum bevorzugten Ausführungsform enthält die wässrige Dispersion somit
(i) die Verbindung mit einer Löslichkeit von weniger als 10 g/l, insbesondere in Mengen von 40 bis 80 Gew.-%,
(ii) mindestens einen Verdicker, insbesondere in Mengen von 0,1 bis 5 Gew.-%,
(iii) mindestens ein Netz- oder Dispergiermittel, insbesondere in Mengen von 0,1 bis 8 Gew.-%,
(iv) Wasser, insbesondere in Mengen von 5 bis 60 Gew.-%,
(v) mindestens ein pH-Stellmittel, insbesondere in Mengen von 0,01 bis 10 Gew.-%, jeweils bezogen auf die Dispersion.

Für diese bevorzugte Ausführungsform der vorliegenden Erfindung gelten alle Parameter, Merkmale, Vorteile und Besonderheiten, welche zuvor im Zusammenhang mit anderen Ausführungsformen genannt wurden, entsprechend.

Vorteilhafterweise weist die Dispersion üblicherweise mindestens ein Additiv auf. Üblicherweise ist das Additiv ausgewählt aus der Gruppe von Rheologieadditiven, Stabilisatoren, entschäumenden Komponenten, pH-Stabilisatoren, Rheologieverbesserern und deren Mischungen.

Als entschäumende Komponenten eignen sich in der Regel geringe Mengen an hydrophoben Bestandteilen, wie z. B. Vaselinöl (INCI: Petrolatum), Rizinusöl, Mineralöle, Pflanzenöle oder die unter den INCI-Namen bekannten Silikonverbindungen, wie z. B. Bisphenylhexamethicone, Dimethicone, Dimethicone Silylate, Dimethiconol, Diphenyl Dimethicone, Diphenylsiloxy Phenyl Trimethicone, Disiloxane, PEG/PPG-12/16 Dimethicone, PEG/PPG-12/18 Dimethicone, PEG/PPG-16/8 Dimethicone, PEG/PPG-8/26 Dimethicone, Phenetyl Disiloxane, Phenyl Dimethicone, Phenyl Trimethicone, Polysilicone-1, Polysilicone-2, Polysilicone-7, Polysilicone-8, Polysilicone-10, Silica Dimethicone Silylate, Silica Silylate, Simethicone, Trimethylsiloxysilicate, Trimethylsiloxysilicate/Dimethicone Crosspolymer, Triphenyl Trimethicone und Trisiloxane, Behenyl Methacrylate/Ethylamine Oxide, Methacrylate Copolymer, C12-14 Sec-Pareth-5, Hexamidine Diisothionate, Hexyldeceth-2, Laureth-5 Butyl Ether, Rhus Semialata Leaf Extract, sowie die Kombination von hydrophoben Bestandteilen mit Feststoffen, beispielsweise Silica, wie Sipernat^{®}-Typen der Firma Evonik Industries. Alkohole, wie z. B. Ethanol, Isopropanol, Hexan-1-ol, Propan-2-ol, können insbesondere in größeren Einsatzmengen ebenfalls entschäumend wirken.

Wenn die Dispersion ein Additiv aufweist, so hat es sich bewährt, wenn die Dispersion das Additiv in Mengen von 0,01 bis 10 Gew.-%, insbesondere 0,1 bis 8 Gew.-%, vorzugsweise 0,5 bis 6 Gew.-%, bevorzugt 1 bis 5 Gew.-%, bezogen auf die Dispersion, enthält.

Gemäß einer wiederum bevorzugten Ausführungsform enthält die wässrige Dispersion somit
(i) die Verbindung mit einer Löslichkeit von weniger als 10 g/l, insbesondere in Mengen von 40 bis 80 Gew.-%,
(ii) mindestens einen Verdicker, insbesondere in Mengen von 0,1 bis 5 Gew.-%,
(iii) mindestens ein Netz- oder Dispergiermittel, insbesondere in Mengen von 0,1 bis 8 Gew.-%,
(iv) Wasser, insbesondere in Mengen von 5 bis 60 Gew.-%,
(v) mindestens ein pH-Stellmittel, insbesondere in Mengen von 0,01 bis 10 Gew.-%, und
(vi) mindestens ein Additiv in Mengen von 0,01 bis 10 Gew.-%, jeweils bezogen auf die Dispersion.

Für diese bevorzugte Ausführungsform der vorliegenden Erfindung gelten alle Parameter, Merkmale, Vorteile und Besonderheiten, welche zuvor im Zusammenhang mit anderen Ausführungsformen genannt wurden, entsprechend.

Darüber hinaus gilt, dass alle Ausführungsformen der wässrigen Dispersion vorzugsweise einen basischen pH-Wert aufweisen. In diesem Zusammenhang hat es sich besonders bewährt, wenn die Dispersion einen pH-Wert von 9,5 oder höher aufweist. Besonders gute Ergebnisse werden in diesem Zusammenhang erhalten, wenn die Dispersion einen pH-Wert im Bereich von 9,5 bis 14, vorzugsweise 9,5 bis 13, bevorzugt 9,5 bis 12, besonders bevorzugt 9,5 bis 11,5, ganz besonders bevorzugt 10,2 bis 11,4, aufweist.

Im Rahmen der vorliegenden Erfindung ist es üblicherweise vorgesehen, dass die Dispersion zumindest im Wesentlichen frei ist von Konservierungsstoffen, insbesondere frei ist von Konservierungsmitteln.

Gleichermaßen ist im Rahmen der vorliegenden Erfindung vorzugsweise vorgesehen, dass die Dispersion zumindest im Wesentlichen frei ist von Bioziden, insbesondere frei ist von Bioziden.

Die erfindungsgemäßen Dispersionen enthalten vorzugsweise keine Konservierungsmittel, keine Biozide und sind auch frei von flüchtigen organischen Verbindungen, d.h. VOC-frei, so dass sie üblicherweise keine deklarationspflichtigen Stoffe enthalten und unter Gesichtspunkten des Umweltschutzes, des Gesundheitsschutzes, sowie des Arbeitsschutzes problemlos und vielfältig angewendet werden können.

Darüber hinaus sind die erfindungsgemäßen Dispersionen lagerstabil, insbesondere über einen Zeitraum von mindestens 2 Monaten, insbesondere mindestens 4 Monaten, insbesondere mindestens 6 Monaten, vorzugsweise mindestens 12 Monaten. Gleichermaßen kann es vorgesehen sein, dass die erfindungsgemäßen Dispersionen über einen Zeitraum von 2 bis 36 Monate, insbesondere 4 bis 20 Monate, insbesondere 6 bis 18 Monate, vorzugsweise 12 bis 15 Monate, lagerstabil ist.

Unter "lagerstabil" ist dabei zu verstehen, dass sich die physikalischen und chemischen Eigenschaften der Zusammensetzung während der Lagerung nicht oder nur in einem Maße ändern, welches die Anwendungseigenschaften der Zusammensetzung nicht beeinträchtigt.

Weiterhin hat es sich bewährt, wenn die Dispersion eine dynamische Viskosität nach Brookfield bei 25 °C im Bereich von 50 bis 500 mPas, insbesondere 60 bis 300 mPas, vorzugsweise 100 bis 200 mPas, aufweist.

Für weitere Einzelheiten zu diesem Erfindungsaspekt kann auf die obigen Ausführungen zu den weiteren Erfindungsaspekten verwiesen werden, welche in Bezug auf die erfindungsgemäße wässrige Dispersion entsprechend gelten.

Wiederum weiterer Gegenstand der vorliegenden Erfindung - gemäß einem **vierten** Aspekt der vorliegenden Erfindung - ist ein Verfahren zur Herstellung einer vorgenannten wässrigen Dispersion, wobei eine Dispersion, enthaltend mindestens eine Verbindung mit einer Löslichkeit bei 20 °C in Wasser im Bereich von 0,05 bis 10 g/l, vorgelegt und eine vorgenannte wässrige Zusammensetzung zugegeben wird.

Besonders gute Ergebnisse werden im Rahmen der vorliegenden Erfindung erhalten, wenn die Zugabe der wässrigen Zusammensetzung unter Eintrag von Scherkräften erfolgt. Der Eintrag der Scherkräfte kann dabei über übliche Mischgeräte, insbesondere Dissolver, erfolgen.

Für weitere Einzelheiten zu dem erfindungsgemäßen Verfahren kann auf die obigen Ausführungen zu den übrigen Erfindungsaspekten verwiesen werden, welche in Bezug auf das erfindungsgemäße Verfahren entsprechend gelten.

Der Gegenstand der vorliegenden Erfindung wird nachfolgend in nicht beschränkender Weise anhand der Ausführungsbeispiele verdeutlicht.

### Ausführungsbeispiele

### 1. Calciumaluminatsulfat

Calciumaluminatsulfat-Suspensionen bilden nach kurzer Zeit einen unlöslichen Bodensatz, welcher auch nicht wieder dispergiert werden kann. Dieser Bodensatz bildet sich anfänglich durch eine Sedimentation der Calciumaluminatsulfat-Bestandenteile und verhärtet anschließend im Rahmen einer Ostwald-Reifung.

Dieses Absetzverhalten kann mittels LUMiSizer Messungen charakterisiert werden. Der LumiSizer ist eine analytische Zentrifuge des Herstellers LUM mit einem integrierten optischen Sensor, um die Partikel- und Tröpfchengeschwindigkeit für Aufrahmungs- und Sedimentationserscheinungen zu analysieren und zu charakterisieren. Für niedrigviskose Proben werden dabei Mikroküvetten verwendet. Für die Auswertung wird die Küvetten Position im LumiSizer gegen die gemessene Lichttransmission aufgetragen Zur Bestimmung des Sedimentationsverhaltens wird die Probe einer beschleunigten Sedimentation ausgesetzt und mittels 865 nm Laser in festgelegten Zeitabständen durchstrahlt. Die Transmission gibt Aufschluss über das Absetzverhalten der Probe. Je schneller eine Probe in dem festgelegten Zeitintervall absetzt, desto instabiler ist sie. Dies resultiert in einem hohen Wert im Instabilitätsindex."

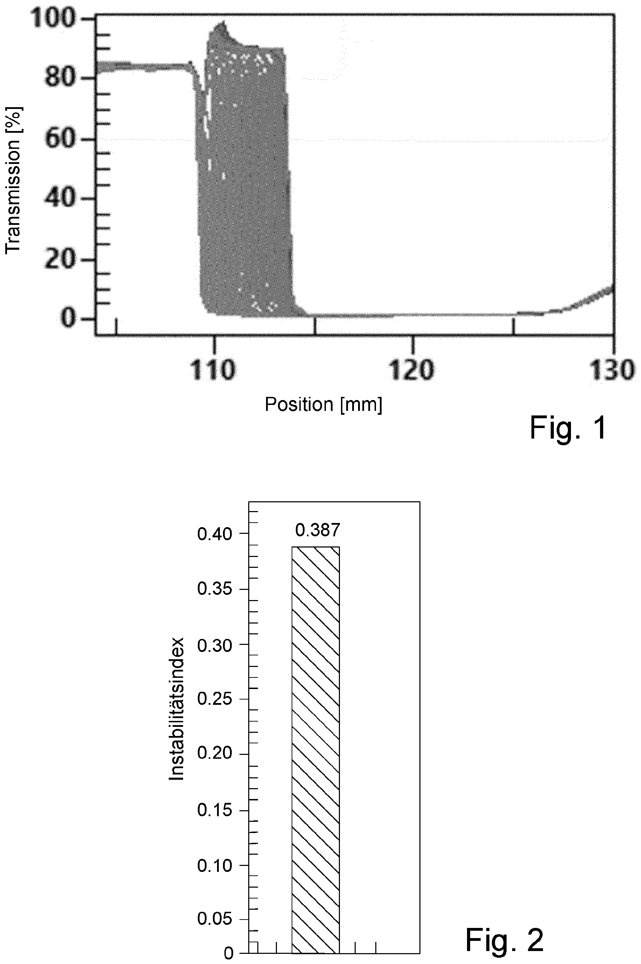

Fig. 1 zeigt das Sedimentationsprofil einer handelsüblichen Calciumaluminatsulfat-Suspension im LUMiSizer. Die Calciumaluminatsulfat-Suspension weist ein spezifisches Gewicht von 1,40 g/cm³, einen Festkörpergehalt von 60 bis 64 Gew.-% und eine Korngrößenverteilung d10 = ca. 0,2 µm, d50 = ca. 0,9 µm und d90 = ca. 3,0 µm auf.

Aus einer steigenden Transmission an der Oberfläche lässt sich ein Ablagern von opaken Bestandteilen am Boden der Küvette schlussfolgern - es bildet sich ein Bodensatz. Der hellgrau zu dunkelgraue Verlauf bildet dabei eine 3. Dimension als Zeitachse. Hellgraue Messwerte finden zeitlich früh statt, während die dunkelgrauen zum Ende der Messung aufgenommen worden sind. Die Darstellung der Auswertung kann individuell angepasst werden. Üblich ist die Angabe der Dispersionsstabilität über einen Instabilitätsindex. Der Instabilitätsindex wird als dimensionslose Größe von der Gerätesoftware durch die Sedimentationsgeschwindigkeit der Dispersionspartikel errechnet, und ist immer auf einen Zeitpunkt t bezogen.

Üblicherweise wird der Zeitpunkt t = 500 Sekunden für die Darstellung des Instabilitätsindex gewählt.

Der Stabilitätsindex der verwendeten handelsüblichen Calciumaluminatsulfat-Suspension zum Zeitpunkt t = 500 Sekunden liegt bei 0,387, wie in Fig. 2 angegeben.

### Stabilisierung der Calciumaluminatsulfat-Suspension

### Herstellung einer Vormischung (erfindungsgemäße Zusammensetzung)

Zur Stabilisierung der Stabilisierung der Calciumaluminatsulfat-Suspension wurden erfindungsgemäße wässrige Zusammensetzungen, welche ein Netz- oder Dispergiermittel und einen Verdicker enthalten hergestellt.

Die Herstellung der erfindungsgemäßen Zusammensetzungen wird beispielhaft an der Vormischung, welche zur Herstellung der in Tabelle 1 angegebenen erfindungsgemäßen Dispersion E1 verwendet wurde, aufgezeigt:
90 Gewichteile einer wässrigen Dispersion Netz- oder Dispergiermittel (eines Maleinsäure-Styrolcopolymers mit pigmentaffinen Gruppen) mit einem Feststoffgehalt von 40 Gew.-% wurden vorgelegt und unter Rühren mit 10 Gewichtsteilen eines Verdickers (wasserlösliche, nichtionische Hydroxyethylcellulose) versetzt. Der Verdicker lässt sich gleichmäßig dispergieren und es wird keine Gelierung oder Verdickung der Dispersion beobachtet.

### Herstellung der erfindungsgemäßen Dispersionen

Die Herstellung der erfindungsgemäßen Dispersionen wird beispielhaft an der Herstellung der erfindungsgemäßen Dispersion E1 erläutert.

Zur Herstellung der erfindungsgemäßen Dispersion E1 werden 98 Gewichteile der handelsüblichen Calciumaluminatsulfat-Suspension mit einem Feststoffanteil von 62 Gew.-% vorgelegt und unter Rühren langsam mit 2 Gewichtsteilen der Vormischung (erfindungsgemäße Zusammensetzung) versetzt. Anschließend wird die Mischung 30 Minuten in einem Dissolver gerührt. Es wird eine niedrigviskose, über mehrere Monate lagerbare Dispersion erhalten, welche keine oder nur geringe Sedimentation zeigt.

Die weiteren erfindungsgemäßen Beispiele E2 bis E6 wurden entsprechend aus Vormischungen, d.h. wässrigen Dispersionen Von Netz- oder Dispergiermittel und Verdicker erhalten. Die genauen Zusammensetzungen der erfindungsgemäßen Dispersionen E1 bis E6 sind in Tabelle 1 angegeben.

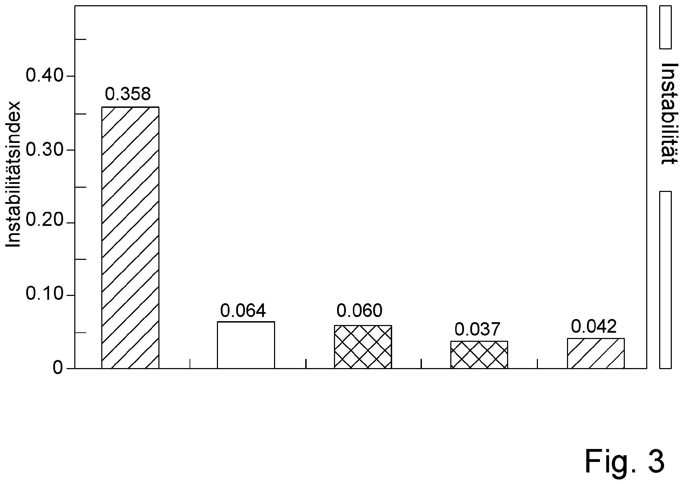

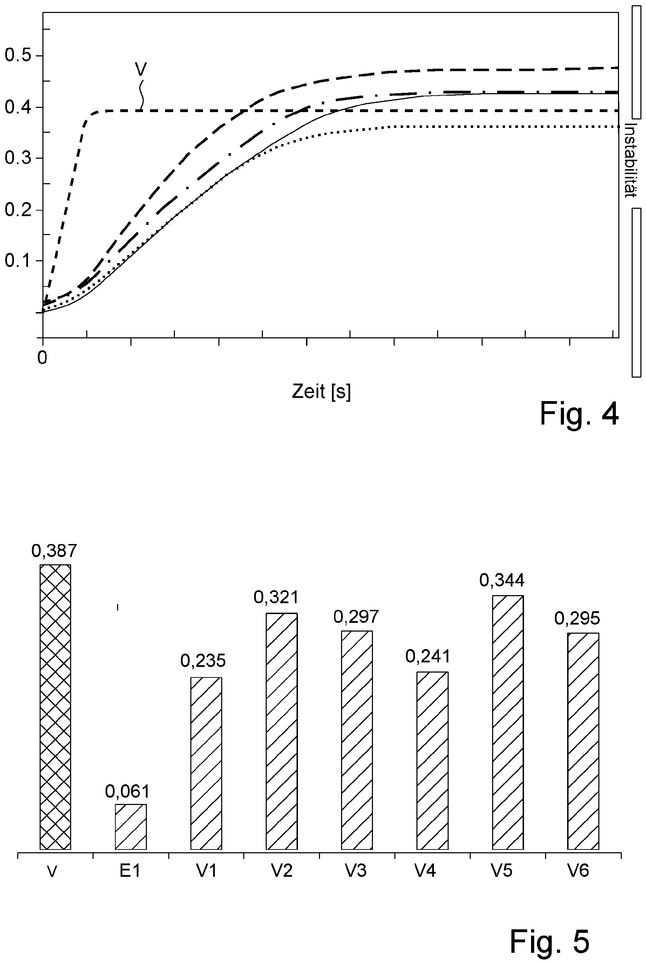

Wie in Fig. 3 und 4 zu erkennen ist, konnte die Calciumaluminatsulfat-Suspension in Form der Dispersion E1 stabilisiert werden:
Der Messungen wurden viermal durchgeführt und gegen die handelsübliche Calciumaluminatsulfat-Suspension als Standard aufgetragen. Die Standard Calciumaluminatsulfat-Suspension ist zum Zeitpunkt t = 500 s bereits vollkommen abgesetzt (Stabilitätsindex 0,358), während sich die stabilisierten Dispersionen stark zeitverzögert absetzen.

Der Stabilitätsindex zum Zeitpunkt t = 500 Sekunden lag für die erfindungsgemäßen Dispersion im Bereich von 0,037 bis 0,064 (vgl. Fig. 3), was einer Verbesserung gegenüber der handelsüblichen Calciumaluminatsulfat-Suspension um den Faktor 15 entspricht.

Im grundlegenden Unterschied zu der nicht stabilisierten, handelsüblichen Calciumaluminatsulfat-Suspension bildet sich bei den erfindungsgemäß stabilisieren Calciumaluminatsulfat-Suspension kein nicht wieder redispergierbarer Bodensatz. Falls sich ein Sediment bildet, kann es problemlos redispergiert werden, da in den erfindungsgemäß stabilisierten Suspensionen die Ostwald-Reifung unterdrückt wird.

**Tabelle 1: Zusammensetzung der eingesetzten Calciumaluminatsulfat-Suspension und der erfindungsgemäßen Dispersionen E1 bis E6 in Gewichtsanteilen; bei Verwendung wässriger Dispersionen als Ausgangstoff ist jeweils der Feststoffgehalt in Gewichtsprozent in Klammern angegeben**

| **Rohstoff** | **V** | **E1** | **E2** | **E3** | **E4** | **E5** | **E6** |
|---|---|---|---|---|---|---|---|
| **Calciumaluminatsulfat-Suspension (62 Gew.-%)** | 100 | 98 | 98 | 98 | 98 | 98 | 98 |
| **Wasserlösliche, nichtionische Hydroxyethylcellulose (100 Gew.-%)** | | 0,2 | 0,2 | 0,2 | 0,2 | 0,2 | 0,2 |
| **Maleinsäure-Styrolcopolymer mit pigmentaffinen Gruppen (40 Gew.-%)** | | 1,8 | | | | | |
| **Anionisches Copolymer mit pigmentaffinen Gruppen (50 Gew.-%)** | | | 1,8 | | | | |
| **Hochmolekulares Block-Copolymer (100 Gew.-%)** | | | | 1,8 | | | |
| **Natriumsalz eines Polycarboxylats (25 Gew.-%)** | | | | | 1,8 | | |
| **Copolymer mit pigmentaffinen Gruppen (40 Gew.-%)** | | | | | | 1,8 | |
| **Natriumsalz einer Polyacrylsäure (45 Gew.-%)** | | | | | | | 1,8 |

### Vergleichsversuche

Um die Leistungsfähigkeit des erfindungsgemäßen Systems zu verdeutlichen wurden die Vergleichsversuche V1 bis V6 durchgeführt, bei welchen jeweils 99 Gewichtsteile einer handelsüblichen Calciumaluminatsulfat-Suspensionen mit einem Gewichtsteil eines Verdickers versetzt wurden. Die genauen Zusammensetzungen können Tabelle 2 entnommen werden.

Anschließend wurde der Stabilitätsindex der Dispersionen zum Zeitpunkt t = 500 Sekunden bestimmt. Die Ergebnisse sind in Fig. 5 wiedergegeben. Es zeigt sich, dass eine signifikante Stabilisierung nur für die erfindungsgemäße Dispersion E1 erreicht werden kann. Die Stabilität der Dispersionen V1 bis V6 ist teilweise leicht erhöht, allerdings steigt bei allen Dispersionen V1 bis V6 die Viskosität jeweils stark an.

**Tabelle 2: Zusammensetzung der eingesetzten Calciumaluminatsulfat-Suspension, der erfindungsgemäßen Dispersionen E1 sowie der Vergleichsdispersionen V1 bis V6 in Gewichtsanteilen; bei Verwendung wässriger Dispersionen als Ausgangstoff ist jeweils der Feststoffgehalt in Gewichtsprozent in Klammern angegeben**

| **Rohstoff** | **V** | **E1** | **V1** | **V2** | **V3** | **V4** | **V5** | **V6** |
|---|---|---|---|---|---|---|---|---|
| **Calciumaluminatsulfat-Suspension (62 Gew.-%)** | 100 | 98 | 98 | 98 | 98 | | | |
| **Wasserlösliche, nichtionische Hydroxyethylcellulose (100 Gew.-%)** | | 0,2 | | | | | | |
| **Maleinsäure-Styrolcopolymer mit pigmentaffinen Gruppen (40 Gew.-%)** | | 1,8 | 2 | | | | | |
| **Hydrophobe pyrogene Kieselsäure (100 Gew.-%)** | | | | 2 | | | | |
| **Urethanhaliger Assoziativverdicker (100 Gew.-%)** | | | | | 2 | | | |
| **Schichtsilikat (Smectit) (100 Gew.-%)** | | | | | | 2 | | |
| **Organisch modifiziertes Schichtsilikat (100 Gew.-%)** | | | | | | | 2 | |
| **Delaminiertes Schichtsilikat (100 Gew.-%)** | | | | | | | | 2 |

### 2. Calciumsilikat-Hydrat

Für die folgenden Versuche wurde eine handelsübliche wässrige Suspension von Calciumsilikat-Hydrat verwendet, welche einen Calciumsilikat-Hydrat-Anteil von 50 Gew.-% aufweist. Die Suspension zeigt eine rasche Sedimentation, im Zuge derer sich ein unlöslicher, nicht wieder dispergierbarer Bodensatz bildet.

Eine Probe dieser Suspension (Probe V) wird mit dem LUMiSizer untersucht. Das Ergebnis ist in Fig. 6 dargestellt und der Stabilitätsindex nach 500 s beträgt 0,156.

Eine weitere Probe (Probe E) der Calciumsilikat-Hydrat-Suspension wurde mit der Vormischung aus Netz- oder Dispergiermittel und Verdicker, welche zur Herstellung der Calciumaluminatsulfat-Probe E1 verwendet wurde, versetzt.

Zur Herstellung der Vormischung wurden 90 Gewichteile einer wässrigen Dispersion eines Netz- oder Dispergiermittels (eines Maleinsäure-Styrolcopolymers mit pigmentaffinen Gruppen) mit einem Feststoffgehalt von 40 Gew.-% wurden vorgelegt und unter Rühren mit 10 Gewichtsteilen eines Verdickers (wasserlösliche, nichtionische Hydroxyethylcellulose) versetzt.

2 Gewichtsteile dieser Vormischung wurden anschließend mit 98 Gewichtsteilen der Calciumsilikat-Hydrat-Suspension gemischt und die Mischung mit dem LUMiSizer untersucht (Probe E). Das Ergebnis ist in Fig. 6 dargestellt und der Stabilitätsindex nach 500 s beträgt 0,037. Auch hier zeigt sich wiederum ein deutlich verbessertes Absetzverhalten und es wird insbesondere die Bildung eines nicht wieder dispergierbaren Bodensatzes wirksam verhindert; falls sich ein Bodensatz bildet, kann er problemlos wieder dispergiert werden.

Fig. 7 zeigt eine Gegenüberstellung der Entwicklung der Stabilitätsindizes der handelsüblichen Calciumsilikat-Hydrat-Suspension (Probe V) und der erfindungsgemäß stabilisierten Calciumsilikat-Hydrat-Suspension (Probe E). Auch hier zeigt sich nochmals eindrucksvoll die deutlich geringere und zeitverzögerte Sedimentation der erfindungsgemäßen Probe,

## Patentansprüche

1. Wässrige Zusammensetzung, insbesondere Lösung oder Dispersion, zur Stabilisierung von Dispersionen, welche eine Verbindung mit einer Löslichkeit im Bereich von 0,05 bis 10 g/l bei 20 °C in Wasser aufweisen,
**dadurch gekennzeichnet,**
**dass** die Zusammensetzung
(a) mindestens einen Verdicker und
(b) mindestens ein Netz- oder Dispergiermittel
aufweist.

2. Wässrige Zusammensetzung nach Anspruch 1, **dadurch gekennzeichnet, dass** die zu stabilisierende Dispersion eine Verbindung mit einer Löslichkeit im Bereich von 0,05 bis 5 g/l, insbesondere 0,1 bis 4 g/l, vorzugsweise 0,2 bis 3 g/l, bevorzugt 0,2 bis 2 g/l, besonders bevorzugt 0,3 bis 1,5 g/l, ganz besonders bevorzugt 0,4 bis 1 g/l, bei 20 °C in Wasser aufweist.

3. Wässrige Zusammensetzung nach einem der vorangehenden Ansprüche, **dadurch gekennzeichnet, dass** der Verdicker ausgewählt ist aus der Gruppe von Polysacchariden, Proteinen, Poylvinylalkoholen, Kieselsäuren, Silikaten und deren Mischungen.

4. Wässrige Zusammensetzung nach einem der vorangehenden Ansprüche, **dadurch gekennzeichnet, dass** der Verdicker ausgewählt ist aus der Gruppe von Xanthan Gum, beta-Glucanen, thiolisierten Polysacchariden, Proteoglycanen, Gummi arabicum, Karaya, Tragant, Johannisbrotkernmehl, Guar, Quittenschleim, Pektin, Agar-Agar, Carrageen, Alginaten, Stärken, Stärkederivaten, Cellulose, Cellulosederivaten, insbesondere Celluloseethern, Kieselsäuren, Bentoniten, Schichtsilikaten, Polyvinylalkoholen, Gelatine, Casein und deren Mischungen.

5. Wässrige Zusammensetzung nach Anspruch 4, **dadurch gekennzeichnet, dass** der Verdicker ausgewählt ist aus der Gruppe von Xanthan Gum, beta-Glucanen, thiolisierten Polysacchariden, Proteoglycanen, Celluloseethern, Kieselsäuren, Bentoniten, Schichtsilikaten, Polyvinylalkoholen, Gelatine, Casein und deren Mischungen.

6. Wässrige Zusammensetzung nach Anspruch 4 oder 5, **dadurch gekennzeichnet, dass** der Verdicker ein Celluloseether ist.

7. Wässrige Zusammensetzung nach einem der vorangehenden Ansprüche, **dadurch gekennzeichnet, dass** das Netz- oder Dispergiermittel ausgewählt ist aus der Gruppe von Polymeren mit pigmentaffinen Gruppen, silikonmodifizierten Polymeren, Block-Copolymeren, Pfropf-Copolymeren, Tensiden, modifizierten natürlichen Ölen und deren Mischungen.

8. Wässrige Zusammensetzung nach einem der vorangehenden Ansprüche, **dadurch gekennzeichnet, dass** das Netz- oder Dispergiermittel ausgewählt ist aus der Gruppe von Polycarboxylaten, insbesondere Salzen von Polyacrylsäuren, Polyphosphaten, insbesondere linearen Polyphosphaten und/oder cyclischen Metaphosphaten, Polyetherphosphaten, Polycarbonsäurepolymeren, Acrylblock-Copolymeren, Polyurethanen, ethoxylierten Fettalkoholen, nichtionischen gesättigten langkettigen Alkoholen, Fettalkoholsulfaten, Alkylphosphonaten, Polysiloxanethern, insbesondere Methoxypolyethoxypropyltrisiloxanen, Alkindiolethoxylaten, Tensiden, Geminitensiden, Bola-Tensiden, Fluortensiden, modifizierten natürlichen Ölen und deren Mischungen.

9. Wässrige Zusammensetzung nach Anspruch 8, **dadurch gekennzeichnet, dass** das Netz- oder Dispergiermittel ausgewählt ist aus der Gruppe von Salzen von Polyacrylsäuren, Polyphosphaten, insbesondere linearen Polyphosphaten und/oder cyclischen Metaphosphaten, Polyetherphosphaten, Polycarbonsäurepolymeren, Acrylblock-Copolymeren, Polyurethanen, ethoxylierten Fettalkoholen, nichtionischen gesättigten langkettigen Alkoholen, Fettalkoholsulfaten, Alkylphosphonaten, Polysiloxanethern, insbesondere Methoxypolyethoxypropyltrisiloxanen, Alkindiolethoxylaten, Geminitensiden, Bola-Tensiden, modifizierten natürlichen Ölen und deren Mischungen.

10. Wässrige Zusammensetzung nach Anspruch 9, **dadurch gekennzeichnet, dass** das Netz- oder Dispergiermittel ausgewählt ist aus der Gruppe von Natriumsalzen von Polyacrylsäuren, Ammoniumsalzen von Polyacrylsäuren, Polyetherphosphaten, Polycarbonsäurepolymeren, modifizierten Styrol-Maleinsäure-Copolymeren, Polysiloxanethern, insbesondere Methoxypolyethoxypropyltrisiloxanen, Geminitensiden, Bola-Tensiden, modifizierten natürlichen Ölen und deren Mischungen.

11. Wässrige Zusammensetzung nach einem der vorangehenden Ansprüche, **dadurch gekennzeichnet, dass** die Zusammensetzung ein gewichtsbezogenes Verhältnis von Verdicker zu Netz- oder Dispergiermittel (Verdicker : Netz-oder Dispergiermittel) im Bereich von 2 : 1 bis 1: 20, insbesondere 1 : 1 bis 1 : 15, vorzugsweise 1 : 1 bis 1 : 10, bevorzugt 1 : 2 bis 1 : 8, besonders bevorzugt 1 : 3 bis 1 : 5, aufweist.

12. Wässrige Zusammensetzung nach einem der vorangehenden Ansprüche, **dadurch gekennzeichnet, dass** die Zusammensetzung den Verdicker in Mengen von 1 bis 20 Gew.-%, insbesondere 2 bis 18 Gew.-%, vorzugsweise 5 bis 15 Gew.-%, bevorzugt 8 bis 12 Gew.-%, bezogen auf die Zusammensetzung, aufweist.

13. Wässrige Zusammensetzung nach einem der vorangehenden Ansprüche, **dadurch gekennzeichnet, dass** die Zusammensetzung das Netz- oder Dispergiermittel in Mengen von 20 bis 65 Gew.-%, insbesondere 25 bis 60 Gew.-%, vorzugsweise 30 bis 55 Gew.-%, bevorzugt 35 bis 50 Gew.-%, bezogen auf die Zusammensetzung, aufweist.

14. Wässrige Zusammensetzung nach einem der vorangehenden Ansprüche, **dadurch gekennzeichnet, dass** die Zusammensetzung Wasser in Mengen von 15 bis 79 Gew.-%, insbesondere 30 bis 78 Gew.-%, vorzugsweise 30 bis 63 Gew.-%, bevorzugt 38 bis 57 Gew.-%, bezogen auf die Zusammensetzung, aufweist.

15. Verwendung einer wässrigen Zusammensetzung nach einem der Ansprüche 1 bis 14 zur Stabilisierung einer wässrigen Dispersion, welche mindestens eine Verbindung mit einer Löslichkeit im Bereich von 0,05 bis 10 g/l, insbesondere 0,05 bis 5 g/l, vorzugsweise 0,1 bis 4 g/l, bevorzugt 0,2 bis 3 g/l, besonders bevorzugt 0,2 bis 2 g/l, ganz besonders bevorzugt 0,3 bis 1,5 g/l, insbesondere bevorzugt 0,4 bis 1 g/l, bei 20 °C in Wasser enthält.

16. Wässrige Dispersion, insbesondere Halbfabrikat, enthaltend
(i) mindestens eine Verbindung mit einer Löslichkeit bei 20 °C in Wasser im Bereich von 0,05 bis 5 g/l,
(ii) mindestens einen Verdicker und
(iii) mindestens ein Netz- oder Dispergiermittel.

17. Verfahren zur Herstellung einer wässrigen Dispersion nach Anspruch 16,
**dadurch gekennzeichnet,**
**dass** eine Dispersion, enthaltend mindestens eine Verbindung mit einer Löslichkeit bei 20 °C in Wasser im Bereich von 0,05 bis 10 g/l, vorgelegt und eine wässrige Zusammensetzung nach einem der Ansprüche 1 bis 13 zugegeben wird.
